(19) Europäisches Patentamt
European Patent Office
Office européen des brevets

(11) EP 1 959 690 A1

(12) EUROPEAN PATENT APPLICATION
published in accordance with Art. 158(3) EPC

(43) Date of publication:
20.08.2008 Bulletin 2008/34

(51) Int Cl.:
H04N 7/30 (2006.01)

(21) Application number: 06828281.3

(22) Date of filing: 08.12.2006

(86) International application number:
PCT/CN2006/003350

(87) International publication number:
WO 2007/065378 (14.06.2007 Gazette 2007/24)

(84) Designated Contracting States:
DE FR GB

(30) Priority: 08.12.2005 CN 200510134530

(71) Applicant: THE CHINESE UNIVERSITY OF HONG KONG
Hong Kong SAR (CN)

(72) Inventors:
• CHAM, Wai, Kuen
  Hong Kong (CN)
• FONG, Chi, Keung
  Hong Kong (CN)

(74) Representative: Delumeau, François Guy et al
Cabinet Beau de Loménie
158 Rue de l'Université
75340 Paris Cedex 07 (FR)

(54) A DEVICE AND METHOD FOR CONVERTING CODING COEFFICIENTS OF VIDEO SIGNAL

(57) Disclosed are a device and a method for transforming first coding coefficients of video signals into second coding coefficients of the video signals. The device includes a first storing unit for storing the first coding coefficients; a second storing unit for storing a transform matrix; a multiplication unit for multiplying the first coding coefficients by coefficients of the transform matrix; an addition unit for adding each of values resulted from the multiplication operation of the multiplication means to form a sum; and a shifting unit for shifting the sum to obtain the second coding coefficients. According to the present invention, signals compressed by various transforms may be transformed to each other, so as to make various compression signals compatible. Thus, the signals can be compatible with more standards and are more universal.

Fig. 1

**Description**

FIELD OF THE INVENTION

This invention refers to a device and method for transforming coding coefficients of video signals, particularly to transform video compression coding coefficients to realize a transform between DCT (Discrete Cosine Transform) compression coding signals and ICT (Integer Cosine Transform) compression coding signals, as well as a transform between signals compressed by different ICT coding modes.

BACKGROUND OF THE INVENTION

The development of the technology of video compression and codec brought about some international standards like MPEG1, MPEG2, H.261, H.262, H.263 and H.264, wherein an eight-order DCT is used in most of standards. Only FRExt in H.264/MPEG-4 (Part 10) AVC adopts an eight-order ICT.

H.264/MPEG-4 (Part 10) AVC (ITU-T H.264/MPEG-4 (Part 10) Advanced Video Coding, "H.264/AVC" for short) is a new international standard developed by a JVT (Joint Video Team) composed of VCEG (Video Coding Experts Group) of ITU-C and MPEG (Moving Picture Experts Group) of ISO/IEC. The efficiency of this standard is about twice of that of MPEF-2. A new attachment FRExt (Fidelity Range Extensions) was presented in July, 2004, which makes the efficiency to be further improved. An eight-order ICT was proposed in the attachment to perform the compression of video signals due to an integer calculation of the ICT, which can simplify the compression and take less resource in view of the DCT.

WMV9 (Microsoft Windows Media 9) was newly developed for networks and broadcasting as well. A video core of the WMV9 is a video codec known as Windows Media 9, which achieves a tradeoff between the load of calculation and the qualify of images. The WMV9 performing ICT video compression has become one of the standards acceptable to Society of Motion Picture and Television Engineers.

In view of the above, there is a need to perform a transform between DCT compression signals and ICT compression signals so as to make H.264/AVC compression signals compatible with other standards.

In addition, although H.264/AVC signals, AVS (Audio Video Coding Standards) signals and WMV9 signals are compressed by ICT, they are not compatible with each other due to different transforms used in respective standards. Therefore, there is one more need to perform a transform among signals compressed by H.264/AVC, AVS or WMV9 so as to realize the cross-compatibility of various standards.

SUMMARY OF THE INVENTION

In view of the above needs, the present invention provides a device and a method to perform a transform between DCT coding coefficients and ICT coding coefficients of video signals.

The present invention is also directed to a device and a method for fast transform between compression coding coefficients of video signals.

According to one aspect of the present invention, there is provided a device for transforming video signals with first coding coefficients of into video signals with second coding coefficients. The device comprises a first storing unit configured to store a first coding coefficients; a second storing unit configured to store a transform matrix; a multiplication unit configured to perform a multiplication operation for the first coding coefficients and the transform matrix; an addition unit configured to add values resulted from the multiplication operation; and a shifting unit configured to shift values resulted from the addition unit to obtain the second coding coefficients.

In a first embodiment of the present invention, the first coding coefficients are DCT video coding coefficients and the second coding coefficients are ICT video coding coefficients. In a second embodiment of the present invention, the first coding coefficients are ICT video coding coefficients and the second coding coefficients are ICT video coding coefficients different from the first coding coefficients. In a third embodiment of the present invention, the first coding coefficients are ICT video coding coefficients and the second coding coefficients are DCT video coding coefficients. The ICT video coding coefficients may be WMV9 video coding coefficients, AVS video coding coefficients and H.264/AVC video coding coefficients.

According to the present invention, the transform matrix is set up such that an error between a first signal vector and a second signal vector meet the error-requirement of the IEEE standard 1180-1990, wherein the first signal vector is transformed from the first coding coefficients by using a reverse coding in accordance with the error-requirement provided in IEEE standard 1180-1990, and the second signal vector is transformed from the second coding coefficients by using a reverse coding in accordance with the error-requirement provided in IEEE standard 1180-1990.

Preferably, the ICT video coding coefficients make up of an eight-order ICT coding coefficients matrix.

Alternatively, the transform device further comprises a third storing means for storing the values from the addition means and the shifting means. The shifting means may shift data stored in the third storing means right by 17, 13, 15, 8, 0, 12, 22 or 16 bits The second coding coefficients is 15-bit.

According to another aspect of the present invention, there is provide a method for transforming video signals with first coding coefficients into video signals with second coding coefficients, comprising: loading the first coding coefficients and a transform matrix; multiplying the first coding coefficients by the transform matrix; adding values resulted from the multiplication operation; and shifting values resulted from the adding operation to obtain the second coding coefficients. In a first embodiment of the present invention, the first coding coefficients are DCT video coding coefficients and the second coding coefficients are ICT video coding coefficients. In a second embodiment of the present invention, the first coding coefficients are ICT video coding coefficients and the second coding coefficients are ICT video coding coefficients different from the first coding coefficients. In a third embodiment of the present invention, the first coding coefficients are ICT video coding coefficients and the second coding coefficients are DCT video coding coefficients. The ICT video coding coefficients may be WMV9 video coding coefficients, AVS video coding coefficients and H.264/AVC video coding coefficients. According to the present invention, the transform matrix is set up such that an error between a first signal vector and a second signal vector meet the error-requirement of the IEEE standard 1180-1990, wherein the first signal vector is transformed from the first coding coefficients by using a reverse coding in accordance with the error-requirement provided in IEEE standard 1180-1990, and the second signal vector is transformed from the second coding coefficients by using a reverse coding in accordance with the error-requirement provided in IEEE standard 1180-1990.

Preferably, the ICT video coding coefficients make up of an eight-order ICT coding coefficients matrix.

According to the present invention, signals compressed by various transforms may be transformed with each other, so as to enable various standards to be compatible with each other.

BRIEF DESCRIPTION OF THE DRAWINGS

Fig. 1 a block diagram for showing a device for transform of coding coefficients according to one embodiment of the present invention.

Fig. 2 shows a signal flow graph of a fast transform of coding coefficients according to one embodiment of the present invention.

Fig. 3 shows a signal flow graph of a fast transform of coding coefficients according to another embodiment of the present invention.

Fig. 4 shows a signal flow graph of a fast transform from AVS coding coefficients to WMV9 coding coefficients according to an embodiment of the present invention.

Fig. 5 shows a signal flow graph of a fast transform from H.264/AVC coding coefficients to a DCT coding coefficients according to an embodiment of the present invention.

Fig. 6 schematically shows a fast transform between DCT coding coefficients and ICT coding coefficients.

Fig. 7 schematically shows a fast transform between H.264/AVC coding coefficients and AVS coding coefficients.

Fig. 8 is a coefficient table of a transform matrix for transform from DCT coding coefficients to H.264/AVC coding coefficients according to an embodiment of the present invention.

Fig. 9 is a coefficient table of a transform matrix for transform from DCT coding coefficients to WMV9 coding coefficients according to an embodiment of the present invention.

Fig. 10 is a coefficient table of a transform matrix for transform from AVS coding coefficients to DCT coding coefficients according to an embodiment of the present invention.

Fig. 11 is a coefficient table of a transform matrix for transform from AVS coding coefficients to H.264/AVC coding coefficients according to an embodiment of the present invention.

Fig. 12 is a coefficient table of a transform matrix for transform from H.264/AVC coding coefficients to AVS coding coefficients according to an embodiment of the present invention.

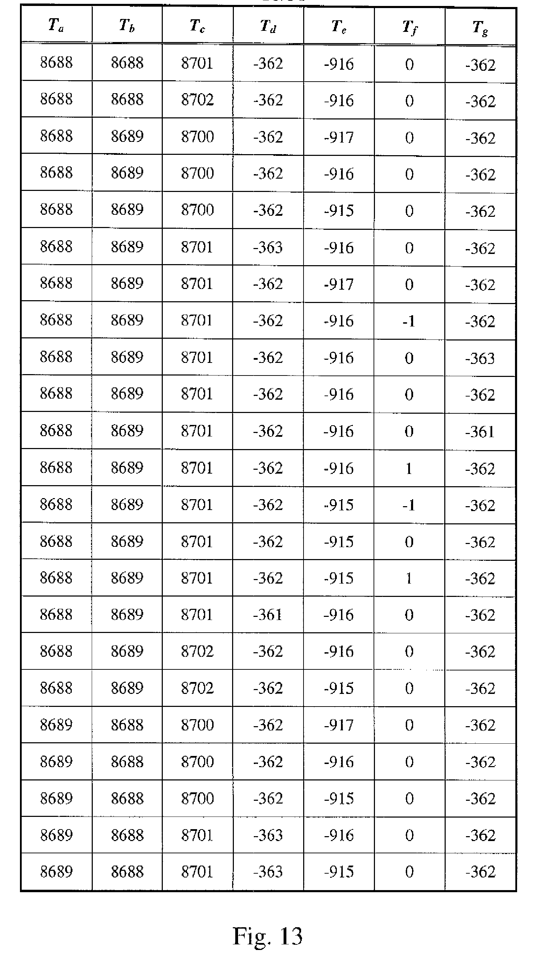

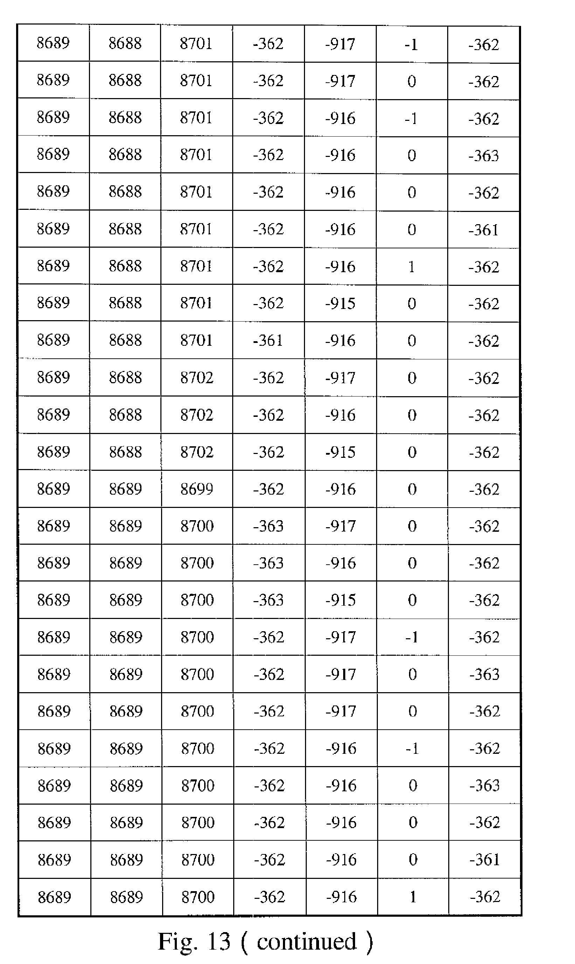

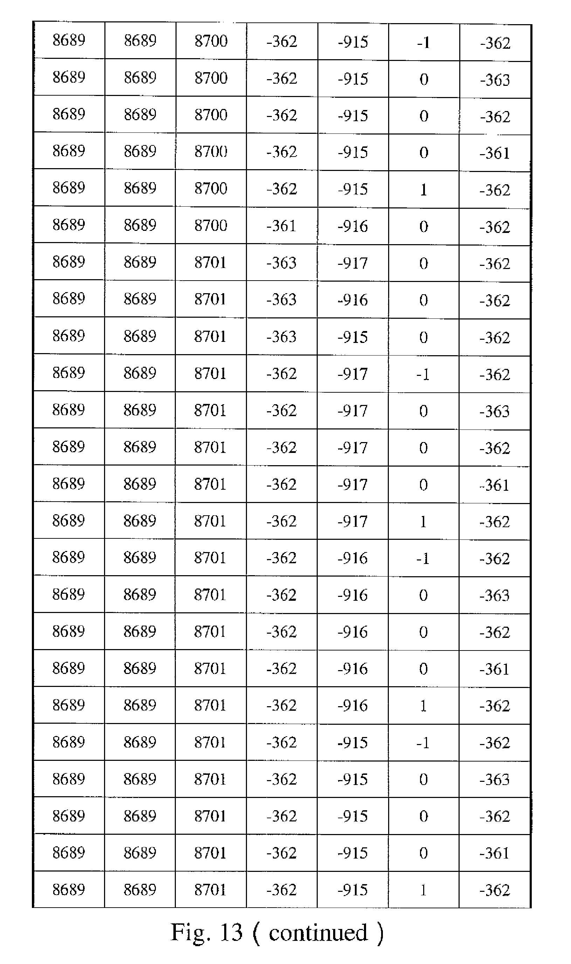

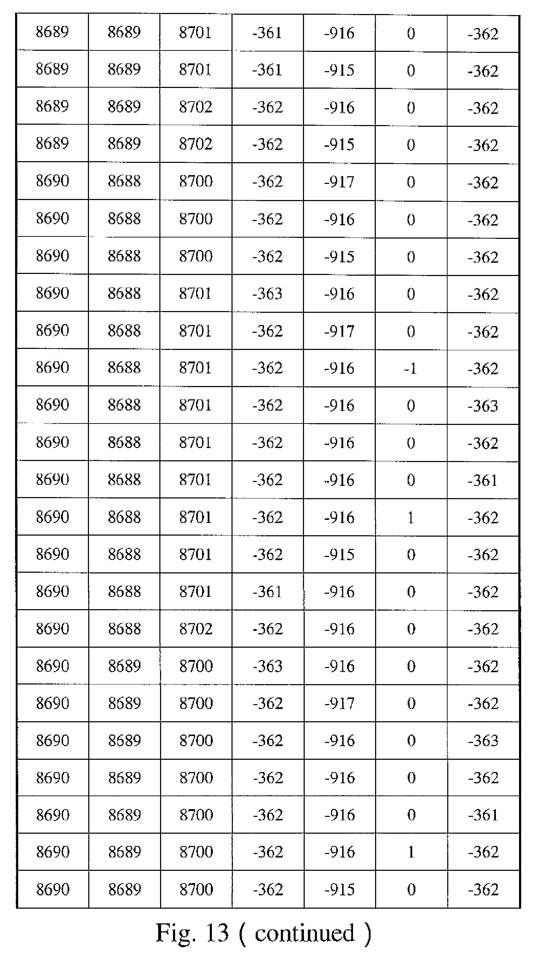

Fig. 13 is a coefficient table of a transform matrix for transform from H.264/AVC coding coefficients to WMV9 coding coefficients according to an embodiment of the present invention.

Fig. 14 is a coefficient table of a transform matrix for transform from WMV9 coding coefficients to DCT coding coefficients according to an embodiment of the present invention.

Fig. 15 is a coefficient table of a transform matrix for transform from WMV9 coding coefficients to AVS coding coefficients according to an embodiment of the present invention.

Fig. 16 shows values of various transform coding coefficients according to a preferable embodiment of the present invention.

## DESCRIPTION OF THE PREFERRED EMBODIMENTS

The embodiments of the invention are illustrated with reference to drawings. The process for DCT coding and process for ICT coding are explained respectively and firstly, and the transform of various coding methods will be described later.

DCT Coding

Setting a video signal as a vector X, DCT coding coefficients, represented as a matrix $C_{dct}$, are obtained through a DCT transform matrix $T_{dct}$:

$$\mathbf{C}_{dct} = \mathbf{T}_{dct}\mathbf{X} \qquad (1)$$

$$\mathbf{X} = \mathbf{T}_{dct}^{-1}\mathbf{C}_{dct} = \mathbf{T}_{dct}^{t}\mathbf{C}_{dct} \qquad (2).$$

ICT Coding

Setting a video signal as a vector X, ICT coding coefficients represented as a vector C are obtained by using an ICT transform matrix $T_i$, wherein the ICT transform matrix $T_i$ may be in the form of $T_i = KKE$ used in AVS, $T_i = KE$ used in H.264/AVC, and $T_i = E$ used in WMV9.
For a 8-order ICT (a, b, c, d, e, f, g), the matrix K and E are given as follows:

$$
\mathbf{E} =
\begin{bmatrix}
g & g & g & g & g & g & g & g \\
a & b & c & d & -d & -c & -b & -a \\
e & f & -f & -e & -e & -f & f & e \\
b & -d & -a & -c & c & a & d & -b \\
g & -g & -g & g & g & -g & g & g \\
c & -a & d & b & -b & -d & a & -c \\
f & -e & e & -f & -f & e & -e & f \\
d & -c & b & -a & a & -b & c & -d
\end{bmatrix}
$$

$$
\mathbf{K} =
\begin{bmatrix}
k_{b3}(0) & 0 & 0 & 0 & 0 & 0 & 0 & 0 \\
0 & k_{b3}(1) & 0 & 0 & 0 & 0 & 0 & 0 \\
0 & 0 & k_{b3}(2) & 0 & 0 & 0 & 0 & 0 \\
0 & 0 & 0 & k_{b3}(3) & 0 & 0 & 0 & 0 \\
0 & 0 & 0 & 0 & k_{b3}(4) & 0 & 0 & 0 \\
0 & 0 & 0 & 0 & 0 & k_{b3}(5) & 0 & 0 \\
0 & 0 & 0 & 0 & 0 & 0 & k_{b3}(6) & 0 \\
0 & 0 & 0 & 0 & 0 & 0 & 0 & k_{b3}(7)
\end{bmatrix}
$$

where the value of $k_{b3}(i)$ is obtained by using the following equation, wherein *E(i)* represents the (*i*)*th* row of the matrix E:

$$\left\| k_{b3}(i)E(i) \right\|^2 = 1$$

According to the definition of ICT, possible combinations of seven values a-g are infinite. Upon tradeoff between the compressibility and the efficiency, H.264/AVC uses ICT (12, 10, 6, 3, 8, 4, 8), while AVS uses ICT (10, 9, 6, 2, 10, 4, 8) and WMV9 uses ICT (16, 15, 9, 4, 16, 12). The following description is given by taking ICT (16, 15, 9, 4, 16, 12) as an example.

Setting a video signal as a vector X, when $T_i$ = KKE, namely, taking the ICT coding used in AVS, the ICT transform matrix $T_i$ is $T_{avs} = K_{avs}K_{avs}E_{avs}$. The ICT coding matrix $C_{avs}$ will be

$$C_{avs} = T_{avs}X = K_{avs}K_{avs}E_{avs}X \qquad (3)$$

$$X = T_{avs}^{-1}C_{avs} = E_{avs}{}^{t}C_{avs} \qquad (4).$$

When $T_i$ = KE, namely, taking the ICT coding used in H.264/AVC, the ICT transform matrix $T_i$ is $T_{h264} = K_{h264}E_{h264}$. The ICT coding matrix $C_{h264}$ will be

$$C_{h264} = T_{h264}X = K_{h264}E_{h264}X \qquad (5)$$

$$X = T_{h264}^{-1}C_{h264} = E_{h264}{}^{t}K_{h264}C_{h264} \qquad (6).$$

When $T_i$ = E, namely, the ICT coding used in WMV9, the ICT transform matrix $T_i$ is $T_{wmv9} = E_{wmv9}$. The ICT coding matrix $C_{wmv9}$ will be

$$C_{wmv9} = T_{wmv9}X = E_{wmv9}X \qquad (7)$$

$$X = T_{wmv9}^{-1}C_{wmv9} = E_{wmv9}{}^{t}K_{wmv9} K_{wmv9}C_{wmv9} \qquad (8).$$

As stated above, in order to achieve compatibility among the DCT, H.264/AVC, AVS and WMV9 standards, it is necessary to perform a transform among H.264/AVC, AVS and WMV9 signals and DCT signals. Twelve transforms occur. Herein, the twelve transforms are classified into four classes, each including three transforms.

Assuming that a coding matrix $C_{in}$ is obtained by coding an input signal vector $X_{in}$ with any of the above-mentioned four standards (referred to as the first coding), the coding matrix $C_{in}$ is transformed, via a transform matrix $T_{outin}$, to another coding matrix $C_{out}$ which complies with another standard (referred to as the second coding). That is, the coding matrix $C_{out}$ is composed of coding coefficients of an output vector $K_{out}$. The transform matrix $T_{outin}$ can be implemented in various manners. Considering the efficiency of the matrix $T_{outin}$ and the accuracy of the signal coefficient $C_{out}$, the present invention prefers to select $T_{outin}$ based on the following two rules:

1) the transform matrix $T_{outin}$ has a simple structure; and
2) the input coding matrix $C_{in}$ can be transformed into a signal vector $\hat{X}_{in}$ by using a reverse coding in accordance with the error-requirement provided in IEEE standard 1180-1990; and the output signal matrix $C_{out}$ can be transformed into a signal vector $X_{out}$ by using a reverse coding in accordance with the error-requirement provided in IEEE standard 1180-1990, wherein an error between signal vectors $\hat{X}_{in}$ and $X_{out}$ must meet the error-requirement of the IEEE standard 1180-1990.

1. A transform from DCT coding signals into other coding signals

1.1 A transform from a DCT coding matrix to an AVS coding matrix

A DCT coding matrix is transformed to an AVS coding matrix via equations (2) and (3), namely:

$$\mathbf{C}_{avs} = \mathbf{T}_{avsdct}\mathbf{C}_{dct} = \mathbf{K}_{avs}\mathbf{K}_{avs}\mathbf{E}_{avs}\mathbf{T}_{dct}{}^{t}\mathbf{C}_{dct} \qquad (\ 9\ )$$

That is, the transform matrix $\mathbf{T}_{avsdct}$ for transforming a DCT coding matrix into an AVS coding matrix is:

$$\mathbf{T}_{avsdct} = \mathbf{K}_{avs}\mathbf{K}_{avs}\mathbf{E}_{avs}\mathbf{T}_{dct}{}^{t} \qquad (\ 10\ )\ ,$$

and can be expressed approximately as:

$$\mathbf{T}_{avsdct}(T_a, T_b, T_c, T_d, T_e, T_f, T_g) \approx \frac{1}{2^b}\begin{bmatrix} T_a & 0 & 0 & 0 & 0 & 0 & 0 & 0 \\ 0 & T_b & 0 & T_g & 0 & T_d & 0 & -T_f \\ 0 & 0 & T_c & 0 & 0 & 0 & -T_e & 0 \\ 0 & -T_d & 0 & T_b & 0 & T_f & 0 & -T_g \\ 0 & 0 & 0 & 0 & T_a & 0 & 0 & 0 \\ 0 & -T_g & 0 & -T_f & 0 & T_b & 0 & -T_d \\ 0 & 0 & T_e & 0 & 0 & 0 & T_c & 0 \\ 0 & T_f & 0 & T_d & 0 & -T_g & 0 & T_b \end{bmatrix} \quad (11)$$

wherein, $T_a$, $T_b$, $T_c$, $T_d$, $T_e$, $T_f$, $T_g$ and $b$ are integers. The b represents the accuracy of the matrix. The larger $b$ is, the more accurate the coefficients of the output coding matrix are. However, the matrix will become more complicated. Different ICT uses different ($T_a$, $T_b$, $T_c$, $T_d$, $T_e$, $T_f$, $T_g$) and $b$. According to above-mentioned two rules, ($T_a$, $T_b$, $T_c$, $T_d$, $T_e$, $T_f$, $T_g$) and b should meet the error requirement of the IEEE standard 1180-1990. Meanwhile, the $T_{avsdet}$ should have a simple structure, namely, $b$ should be a minimum.

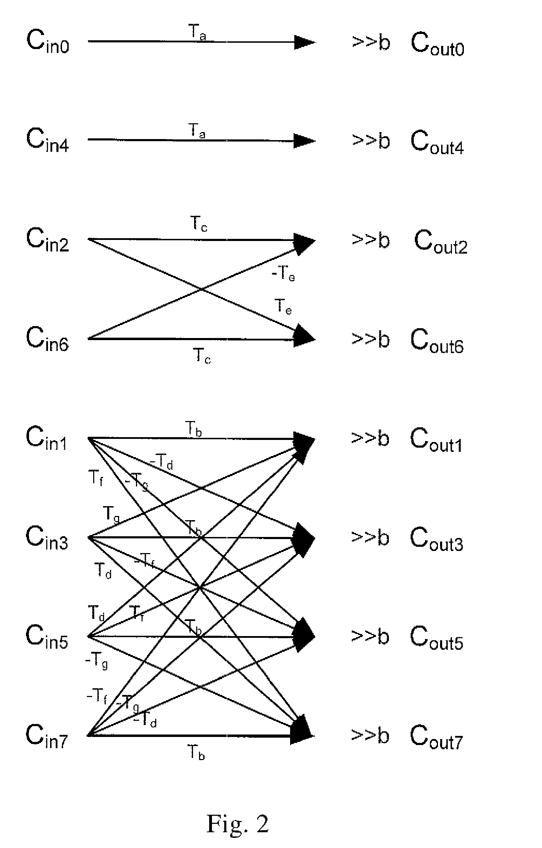

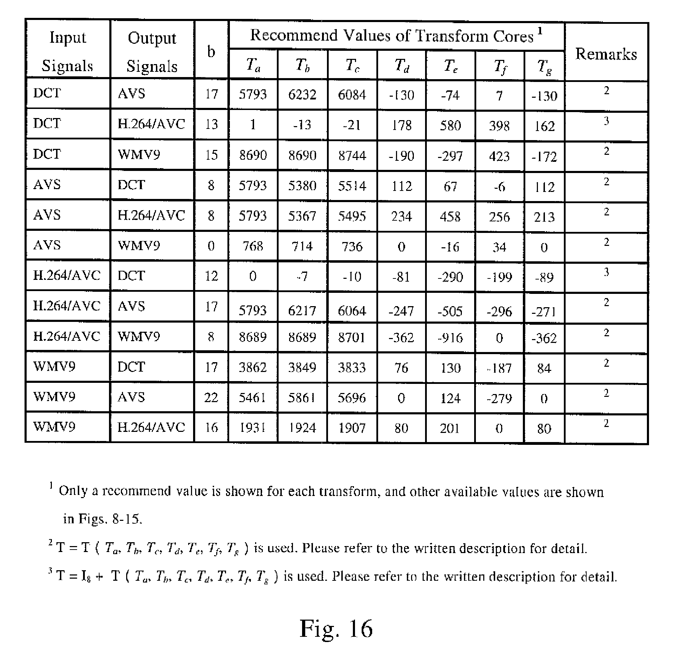

According to the rules, when the coefficients of the input DCT coding matrix are 12-bit or more and b is 17, the coefficients of the transformed coding matrix $C_{avs}$ should be represented in 15-bit, namely, ($T_a$, $T_b$, $T_c$, $T_d$, $T_e$, $T_f$, $T_g$)= (5793, 6232, 6048, -130, -74, 7, -130), as shown in Fig. 16. A fast method for this transform will be given with reference to Fig. 2.

1.2 A transform from a DCT coding matrix to a H.264/AVC coding matrix

A DCT coding matrix is transformed to a H.264/AVC coding matrix via equations (2) and (5), namely:

$$\mathbf{C}_{h264} = \mathbf{T}_{h264dct}\mathbf{C}_{dct} = \mathbf{K}_{h264}\mathbf{E}_{h264}\mathbf{T}_{dct}{}^{t}\mathbf{C}_{dct} \qquad (\ 12\ )\ .$$

The transform matrix $\mathbf{T}_{h264dct}$ for transforming a DCT coding matrix into an H.264/AVC coding matrix is:

$$\mathbf{T}_{h264dct} = \mathbf{K}_{h264}\mathbf{E}_{h264}\mathbf{T}_{dct}{}^{t} \qquad (\ 13\ )$$

wherein the $\mathbf{T}_{h264dct}$ is similar to a unit matrix and can be given approximately:

$$\mathbf{T}_{h264dct}(T_a,T_b,T_c,T_d,T_e,T_f,T_g) \approx I_8 + \frac{1}{2^b}\begin{bmatrix} T_a & 0 & 0 & 0 & 0 & 0 & 0 & 0 \\ 0 & T_b & 0 & T_g & 0 & T_d & 0 & -T_f \\ 0 & 0 & T_c & 0 & 0 & 0 & -T_e & 0 \\ 0 & -T_d & 0 & T_b & 0 & T_f & 0 & -T_g \\ 0 & 0 & 0 & 0 & T_a & 0 & 0 & 0 \\ 0 & -T_g & 0 & -T_f & 0 & T_b & 0 & -T_d \\ 0 & 0 & T_e & 0 & 0 & 0 & T_c & 0 \\ 0 & T_f & 0 & T_d & 0 & -T_g & 0 & T_b \end{bmatrix}(14)$$

wherein $I_8$ is an eight-order matrix.

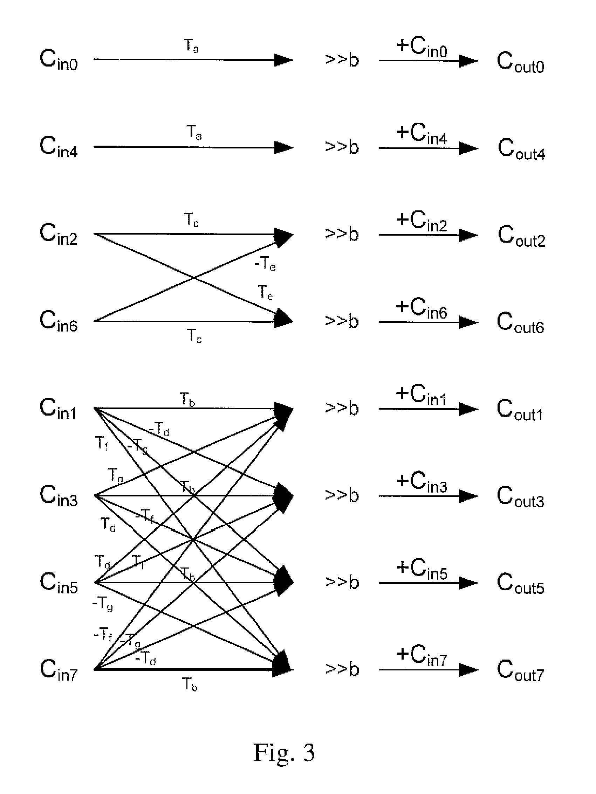

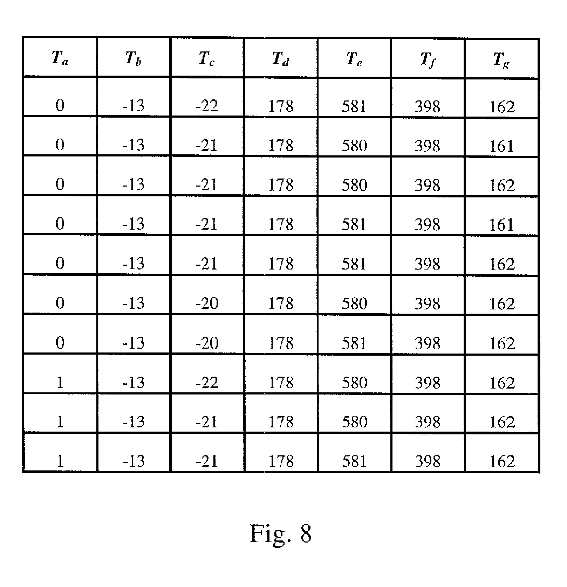

According to the rules, when the coefficients of the input DCT coding matrix are 12-bit or more and b is 13, values of $T_a$, $T_b$, $T_c$, $T_d$, $T_e$, $T_f$ and $T_g$ should be one of the groups shown in the tables in Figs. 8a-8d, and the coefficients of the transformed coding matrix $C_{h264}$ should be represented by 15-bit or more to meet the error requirement of the IEEE standard 1180-1990. A fast transform method for this transform is shown with reference to Fig. 3.

1.3 A transform from a DCT coding matrix to a WMV9 coding matrix

A DCT coding matrix is transformed to a WMV9 coding matrix via equations (2) and (7), namely,

$$\mathbf{C}_{wmv9} = \mathbf{T}_{wmv9dct}\mathbf{C}_{dct} = \mathbf{E}_{wmv9}\mathbf{T}_{dct}{}^t\mathbf{C}_{dct} \qquad (15).$$

The transform matrix $\mathbf{T}_{wmv9dct}$ for transforming a DCT coding matrix into a WMV9 coding matrix is:

$$\mathbf{T}_{wmv9dct} = \mathbf{E}_{wmv9}\mathbf{T}_{dct}{}^t \qquad (16)$$

and can be expressed approximately as:

$$\mathbf{T}_{wmv9dct}(T_a,T_b,T_c,T_d,T_e,T_f,T_g) \approx \frac{1}{2^b}\begin{bmatrix} T_a & 0 & 0 & 0 & 0 & 0 & 0 & 0 \\ 0 & T_b & 0 & T_g & 0 & T_d & 0 & -T_f \\ 0 & 0 & T_c & 0 & 0 & 0 & -T_e & 0 \\ 0 & -T_d & 0 & T_b & 0 & T_f & 0 & -T_g \\ 0 & 0 & 0 & 0 & T_a & 0 & 0 & 0 \\ 0 & -T_g & 0 & -T_f & 0 & T_b & 0 & -T_d \\ 0 & 0 & T_e & 0 & 0 & 0 & T_c & 0 \\ 0 & T_f & 0 & T_d & 0 & -T_g & 0 & T_b \end{bmatrix}(17)$$

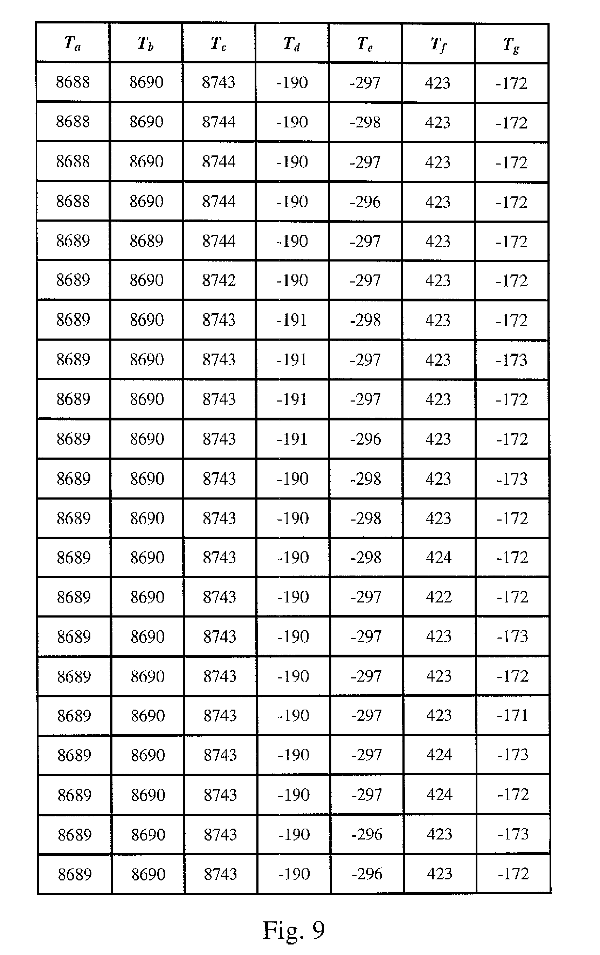

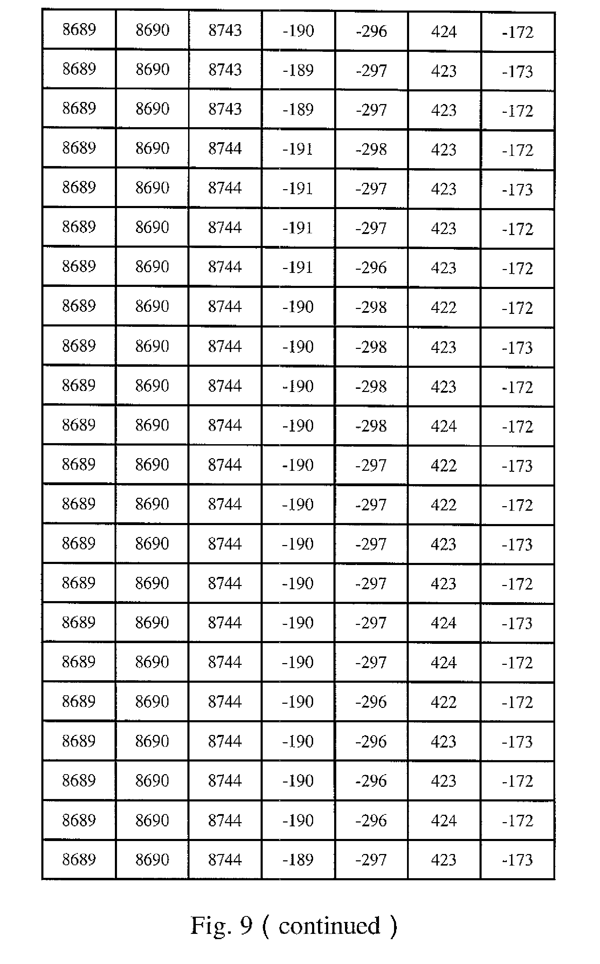

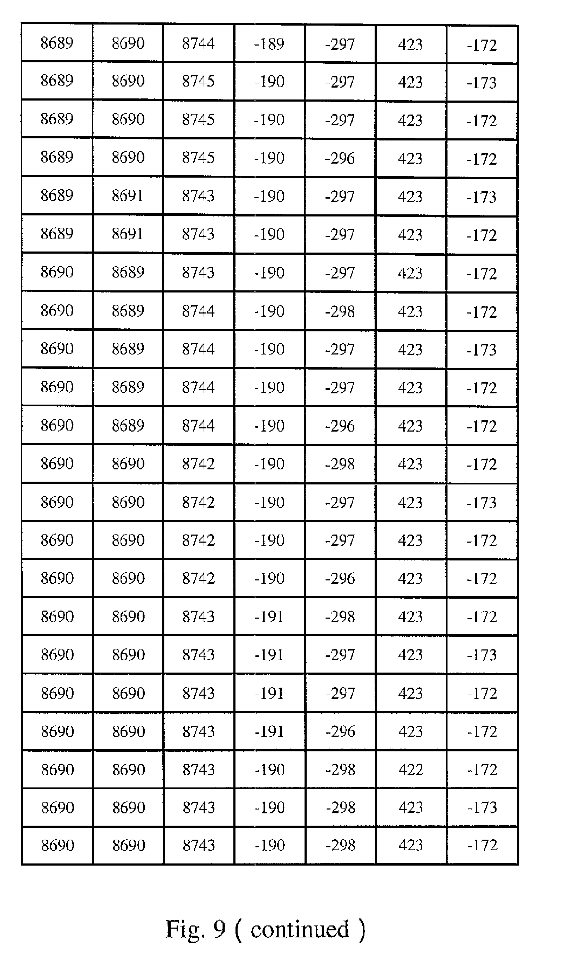

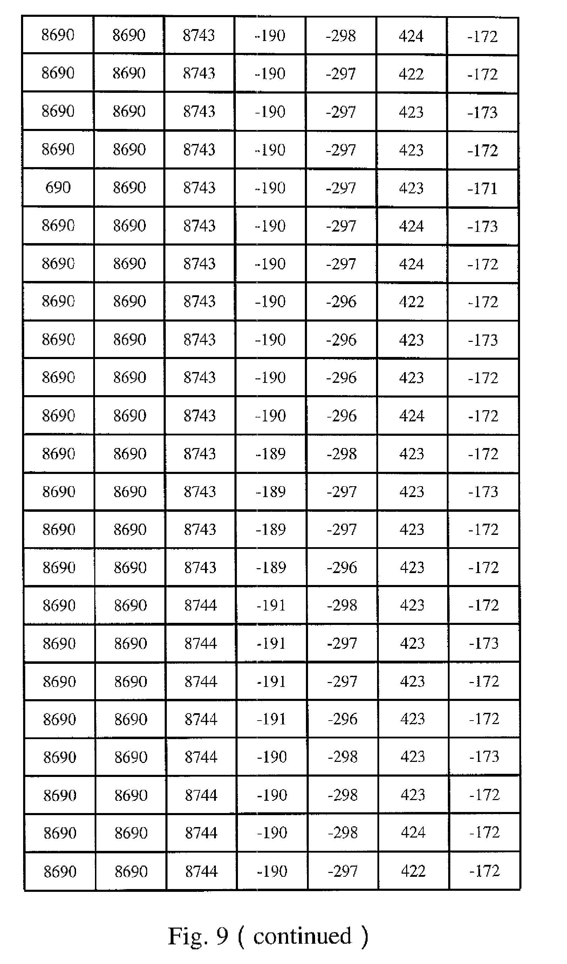

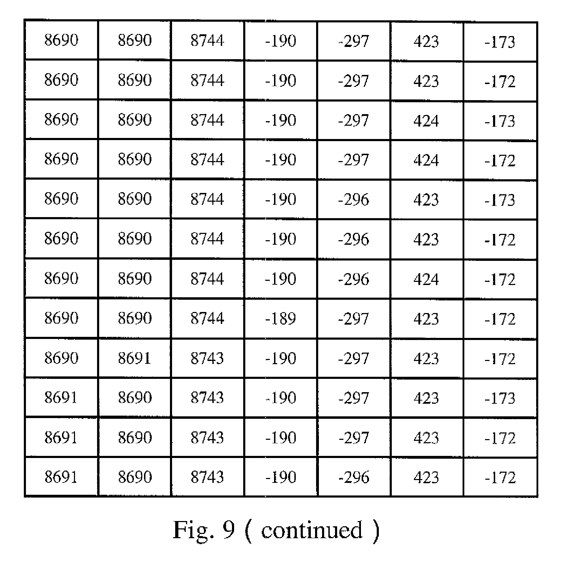

wherein, according to the rules, when the coefficients of the input DCT coding matrix are 12-bit or more and *b* is 15, values of $T_a$, $T_b$, $T_c$, $T_d$, $T_e$, $T_f$ and $T_g$ should be one of the groups shown in the table in Fig. 9, and the coefficients of the transformed coding matrix $C_{wmv}$ should be represented in 15-bit or more, so as to meet the error requirement of the IEEE standard 1180-1990. According to a preferred embodiment of the present invention, $(T_a, T_b, T_c, T_d, T_e, T_f, T_g) = (1, -13, -21, 178, 580, 398, 162)$, as shown in Fig. 16. A fast transform method can be shown with reference to Fig. 2.

2. A transforming from AVS coding signals into other coding signals

2.1 A transform from an AVS coding matrix to a DCT coding matrix

An AVS coding matrix is transformed to a DCT coding matrix via equations (4) and (1), namely:

$$\mathbf{C}_{dct} = \mathbf{T}_{dctavs}\mathbf{C}_{avs} = \mathbf{T}_{dct}\mathbf{E}_{avs}{}^{t}\mathbf{C}_{avs} \qquad (\,18\,)\,.$$

That is, the transform matrix $\mathbf{T}_{dctavs}$ for transforming an AVD coding matrix into a DCT coding matrix is:

$$\mathbf{T}_{dctavs} = \mathbf{T}_{dct}\mathbf{E}_{avs}{}^{t} \qquad (\,19\,)$$

and can be expressed approximately as:

$$\mathbf{T}_{dctavs}(T_a,T_b,T_c,T_d,T_e,T_f,T_g) \approx \frac{1}{2^b}\begin{bmatrix} T_a & 0 & 0 & 0 & 0 & 0 & 0 & 0 \\ 0 & T_b & 0 & T_g & 0 & T_d & 0 & -T_f \\ 0 & 0 & T_c & 0 & 0 & 0 & -T_e & 0 \\ 0 & -T_d & 0 & T_b & 0 & T_f & 0 & -T_g \\ 0 & 0 & 0 & 0 & T_a & 0 & 0 & 0 \\ 0 & -T_g & 0 & -T_f & 0 & T_b & 0 & -T_d \\ 0 & 0 & T_e & 0 & 0 & 0 & T_c & 0 \\ 0 & T_f & 0 & T_d & 0 & -T_g & 0 & T_b \end{bmatrix}(20)\,.$$

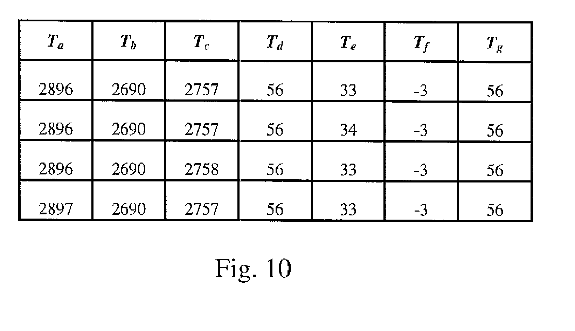

According to the rules, when the coefficients of the input AVS coding matrix are 12-bit or more and the b is 8, the values of $T_a$, $T_b$, $T_c$, $T_d$, $T_c$, $T_f$ and $T_g$ should be one of the groups shown in the table in Fig. 10, and the coefficients of the transformed coding matrix $C_{dct}$ should be represented by 15-bit or more, so as to meet the error requirement of the IEEE standard 1180-1990. According to a preferred embodiment of the present invention, $(T_a, T_b, T_c, T_d, T_e, T_f, T_g)$ = (5793, 5380, 5514, 112, 67, -6, 112), as shown in Fig. 16.

2.2 A transform from an AVS coding matrix to a H.264/AVC coding matrix

an AVS coding matrix is transformed to a H.264/AVC coding matrix via equations (4) and (5), namely:

$$\mathbf{C}_{h264} = \mathbf{T}_{h264avs}\mathbf{C}_{avs} = \mathbf{K}_{h264}\mathbf{E}_{h264}\mathbf{E}_{avs}{}^{t}\mathbf{C}_{avs} \qquad (\,21\,)\,.$$

That is, the transform matrix $\mathbf{T}_{h264avs}$ for transforming an AVS coding matrix into a DCT coding matrix is:

$$\mathbf{T}_{h264avs} = \mathbf{K}_{h264}\mathbf{E}_{h264}\mathbf{E}_{avs}{}^{t} \qquad (\,22\,)$$

wherein the matrix $\mathbf{T}_{h264avs}$ may be approximately expressed as:

$$\mathbf{T}_{h264avs}(T_a, T_b, T_c, T_d, T_e, T_f, T_g) \approx \frac{1}{2^b} \begin{bmatrix} T_a & 0 & 0 & 0 & 0 & 0 & 0 & 0 \\ 0 & T_b & 0 & T_g & 0 & T_d & 0 & -T_f \\ 0 & 0 & T_c & 0 & 0 & 0 & -T_e & 0 \\ 0 & -T_d & 0 & T_b & 0 & T_f & 0 & -T_g \\ 0 & 0 & 0 & 0 & T_a & 0 & 0 & 0 \\ 0 & -T_g & 0 & -T_f & 0 & T_b & 0 & T_d \\ 0 & 0 & T_e & 0 & 0 & 0 & T_c & 0 \\ 0 & T_f & 0 & T_d & 0 & -T_g & 0 & T_b \end{bmatrix} (22).$$

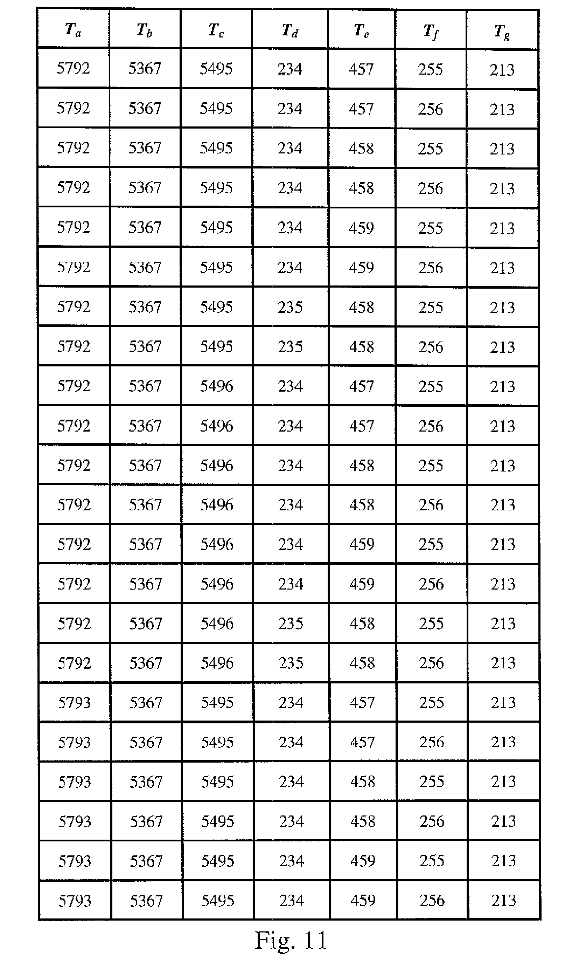

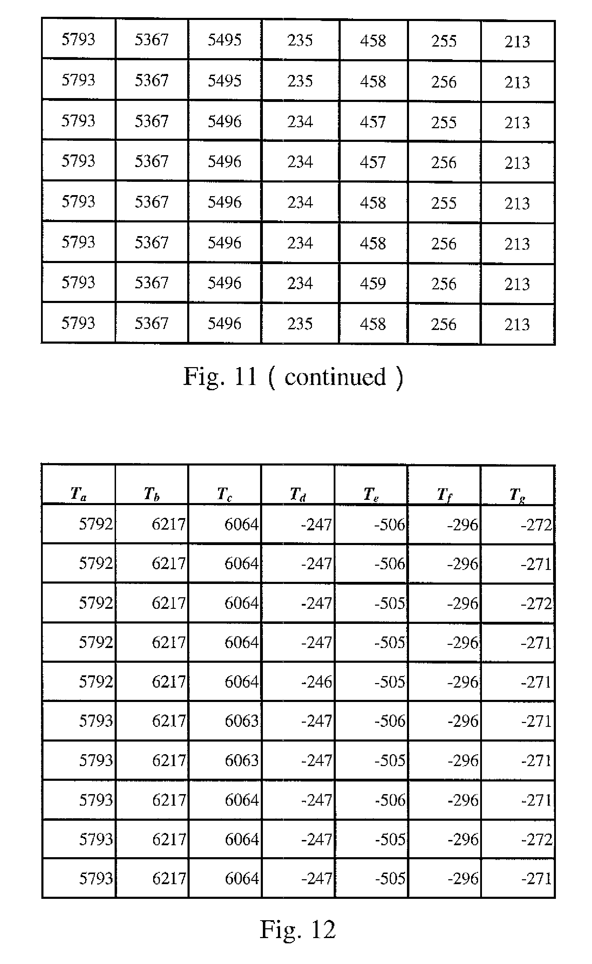

According to the rules, when the coefficients of the input AVS coding matrix are 12-bit or more and the b is 8, the values of $T_a$, $T_b$, $T_c$, $T_d$, $T_e$, $T_f$ and $T_g$ should be one of the groups shown in the table in Fig. 11, and the coefficients of the transformed matrix $C_{h264}$ should be 15-bit or more, so as to meet the error requirement of the IEEE standard 1180-1990. According to a preferred embodiment of the present invention, $(T_a, T_b, T_c, T_d, T_e, T_f, T_g)$ = (5793, 5367, 5495, 234, 458, 256, 213), as shown in Fig. 16. The fast transform method for this transform is shown in Fig. 2.

2.3 A transform from an AVS coding matrix to a WMV9 coding matrix

An AVS coding matrix is transformed to a WMV9 coding matrix via equations (4) and (7), namely:

$$\mathbf{C}_{wmv9} = \mathbf{T}_{wmv9avs}\mathbf{C}_{avs} = \mathbf{E}_{wmv9}\mathbf{E}_{avs}{}^t\mathbf{C}_{avs} \qquad (23).$$

That is, the transform matrix $T_{wmv9avs}$ for transforming an AVS coding matrix into a WMV9 coding matrix is:

$$\mathbf{T}_{wmvavs} = \mathbf{E}_{wmv9}\mathbf{E}_{avs}{}^t \qquad (24)$$

wherein the matrix $T_{wmv9avs}$ may be expressed approximately as:

$$\mathbf{T}_{wmv9avs}(T_a, T_b, T_c, T_d, T_e, T_f, T_g) \approx \frac{1}{2^b} \begin{bmatrix} T_a & 0 & 0 & 0 & 0 & 0 & 0 & 0 \\ 0 & T_b & 0 & T_g & 0 & T_d & 0 & -T_f \\ 0 & 0 & T_c & 0 & 0 & 0 & -T_e & 0 \\ 0 & -T_d & 0 & T_b & 0 & T_f & 0 & -T_g \\ 0 & 0 & 0 & 0 & T_a & 0 & 0 & 0 \\ 0 & -T_g & 0 & -T_f & 0 & T_b & 0 & -T_d \\ 0 & 0 & T_e & 0 & 0 & 0 & T_c & 0 \\ 0 & T_f & 0 & T_d & 0 & -T_g & 0 & T_b \end{bmatrix} (25).$$

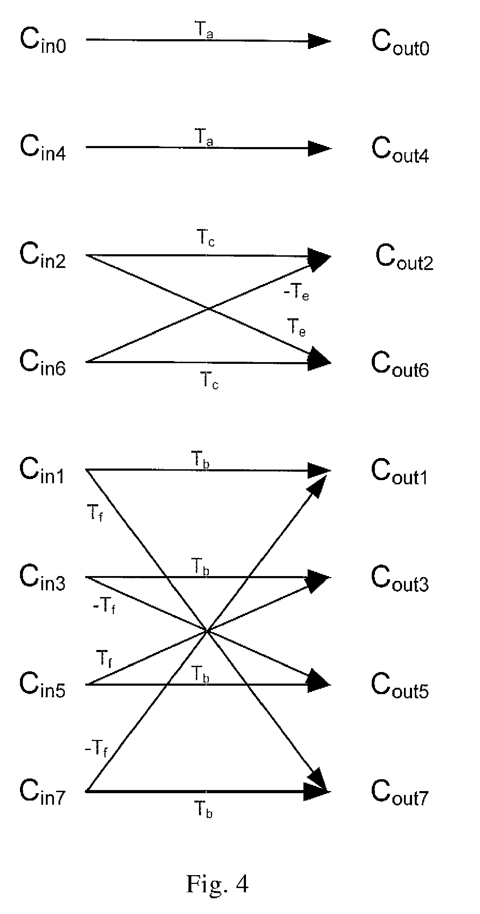

According to the rules, when the coefficients of the input AVS coding matrix are 12-bit or more and the b is 0, the coefficients of the transformed coding matrix $C_{wmv}$ should be represented by 15 bits. According to a preferred embodiment of the present invention, $(T_a, T_b, T_c, T_d, T_e, T_f, T_g)$ = (768, 714, 736, 0, -16, 34, 0), as shown in Fig. 16. A fast transform method for this transform is shown in Fig. 4.

3. A transforming from an H.264/AVC coding signal into other coding signals.

3.1 A transform from a H.264/AVC coding matrix to a DCT coding matrix

A H.264/AVC coding matrix is transformed to a DCT coding matrix via equations (6) and (1), namely:

$$\mathbf{C}_{dct} = \mathbf{T}_{dcth264}\mathbf{C}_{h264} = \mathbf{T}_{dct}\mathbf{E}_{h264}{}^{t}\mathbf{K}_{h264}\mathbf{C}_{h264} \qquad (\,26\,)\,.$$

That is, the transform matrix $T_{dcth264}$ for transforming an H.264/AVC coding matrix into a DCT coding matrix is:

$$\mathbf{T}_{dcth264} = \mathbf{T}_{dct}\mathbf{K}_{h264}\mathbf{E}_{h264}{}^{t}\qquad\qquad(\,27\,)$$

and may be expressed approximately as:

$$\mathbf{T}_{dcth264}(T_a,T_b,T_c,T_d,T_e,T_f,T_g)\approx I_8 + \frac{1}{2^b}\begin{bmatrix} T_a & 0 & 0 & 0 & 0 & 0 & 0 & 0 \\ 0 & T_b & 0 & T_g & 0 & T_d & 0 & -T_f \\ 0 & 0 & T_c & 0 & 0 & 0 & -T_e & 0 \\ 0 & -T_d & 0 & T_b & 0 & T_f & 0 & -T_g \\ 0 & 0 & 0 & 0 & T_a & 0 & 0 & 0 \\ 0 & -T_g & 0 & -T_f & 0 & T_b & 0 & -T_d \\ 0 & 0 & T_e & 0 & 0 & 0 & T_c & 0 \\ 0 & T_f & 0 & T_d & 0 & -T_g & 0 & T_b \end{bmatrix}(28).$$

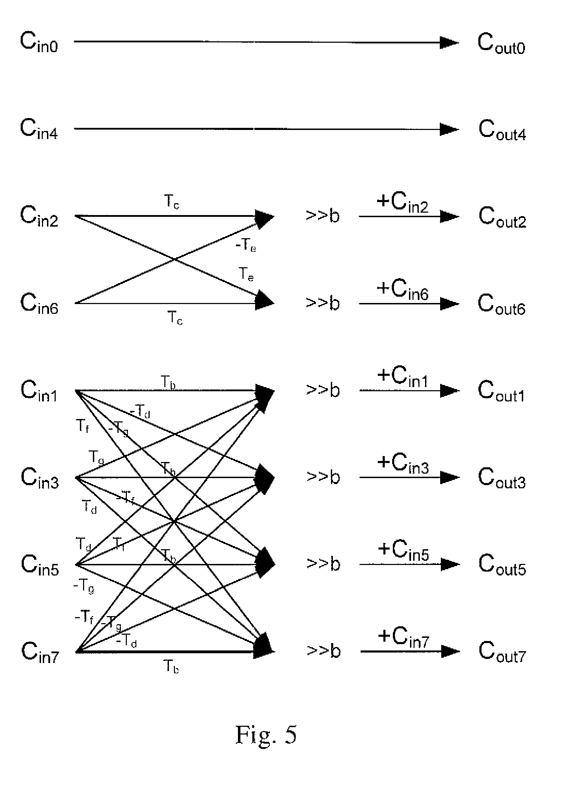

According to the rules, when the coefficients of the input H.264/AVC coding matrix are 12-bit or more and the b is 12, the coefficients of the transformed coding matrix $C_{dct}$ should be represented by 15 bits. According to a preferred embodiment of the present invention, $(T_a, T_b, T_c, T_d, T_e, T_f, T_g) = (0, -7, -10, -81, -290, -199, -89)$, as shown in Fig. 16. A fast transform method for this transform is shown in Fig. 5.

3.2 A transform from a H.264/AVC coding matrix to an AVS coding matrix

A H.264/AVC coding matrix is transformed to an AVS coding matrix via equations (6) and (3), namely:

$$\mathbf{C}_{avs} = \mathbf{T}_{avsh264}\mathbf{C}_{h264} = \mathbf{K}_{avs}\mathbf{K}_{avs}\mathbf{E}_{avs}\mathbf{E}_{h264}{}^{t}\mathbf{K}_{h264}\mathbf{C}_{h264} \,(\,29\,)\,.$$

That is, the transform matrix $T_{avsh264}$ for transforming an H.264/AVC coding matrix into an AVS coding matrix is:

$$\mathbf{T}_{avsh264} = \mathbf{K}_{avs}\mathbf{K}_{avs}\mathbf{E}_{avs}\mathbf{E}_{h264}{}^{t}\mathbf{K}_{h264}\qquad\qquad(\,30\,)$$

and may be approximately expressed as:

$$\mathbf{T}_{avsh264}(T_a,T_b,T_c,T_d,T_e,T_f,T_g) \approx \frac{1}{2^b}\begin{bmatrix} T_a & 0 & 0 & 0 & 0 & 0 & 0 & 0 \\ 0 & T_b & 0 & T_g & 0 & T_d & 0 & -T_f \\ 0 & 0 & T_c & 0 & 0 & 0 & -T_e & 0 \\ 0 & -T_d & 0 & T_b & 0 & T_f & 0 & -T_g \\ 0 & 0 & 0 & 0 & T_a & 0 & 0 & 0 \\ 0 & -T_g & 0 & -T_f & 0 & T_b & 0 & -T_d \\ 0 & 0 & T_e & 0 & 0 & 0 & T_c & 0 \\ 0 & T_f & 0 & T_d & 0 & -T_g & 0 & T_b \end{bmatrix}(31).$$

According to the rules, when the coefficients of the input H.264/AVC coding matrix are 12-bit or more and the b is 17, the values of $T_a$, $T_b$, $T_c$, $T_d$, $T_e$, $T_f$ and $T_g$ should be one of the groups shown in the table in Fig. 12, and the coefficients of the transformed coding matrix $C_{avs}$ should be represented by 15 or more bits, so as to meet the error requirement of the IEEE standard 1180-1990. According to a preferred embodiment of the present invention, ($T_a$, $T_b$, $T_c$, $T_d$, $T_e$, $T_f$, $T_g$) = (5793, 6217, 6064, -247,-505,-296, -271), as shown in Fig. 16. A fast transform method for this transform is shown in Fig. 2.

3.3 A transform from a H.264/AVC coding matrix to a WMV9 coding matrix

A H.264/AVC coding matrix is transformed to a WMV9 coding matrix via equations (6) and (7), namely:

$$\mathbf{C}_{wmv9} = \mathbf{T}_{wmv9h264}\mathbf{C}_{h264} = \mathbf{E}_{wmv9}\mathbf{E}_{h264}{}^t\mathbf{K}_{h264}\mathbf{C}_{h264}\ (\ 32\ )\ .$$

That is, the transform matrix $T_{wmv9h264}$ for transforming a H.264/AVC coding matrix into a WMV9 coding matrix is:

$$\mathbf{T}_{wmv9h264} = \mathbf{E}_{wmv9}\mathbf{E}_{h264}{}^t\mathbf{K}_{h264}\qquad\qquad(\ 33\ )$$

and may be approximately expressed as:

$$\mathbf{T}_{wmv9h264}(T_a,T_b,T_c,T_d,T_e,T_f,T_g) \approx \frac{1}{2^b}\begin{bmatrix} T_a & 0 & 0 & 0 & 0 & 0 & 0 & 0 \\ 0 & T_b & 0 & T_g & 0 & T_d & 0 & -T_f \\ 0 & 0 & T_c & 0 & 0 & 0 & -T_e & 0 \\ 0 & -T_d & 0 & T_b & 0 & T_f & 0 & -T_g \\ 0 & 0 & 0 & 0 & T_a & 0 & 0 & 0 \\ 0 & -T_g & 0 & -T_f & 0 & T_b & 0 & -T_d \\ 0 & 0 & T_e & 0 & 0 & 0 & T_c & 0 \\ 0 & T_f & 0 & T_d & 0 & -T_g & 0 & T_b \end{bmatrix}(34).$$

According to the rules, when the coefficients of the input H.264/AVC coding matrix are 12-bit or more and the b is 8, the coefficients of the transformed coding matrix $C_{wmv}$ should be represented by 15 bits, so as to meet the error requirement of the IEEE standard 1180-1990. According to a preferred embodiment of the present invention, ($T_a$, $T_b$, $T_c$, $T_d$, $T_e$, $T_f$, $T_g$) = (8689, 8689, 8701, -362, -916, 0, -362), as shown in Fig. 16. A fast transform method for this transform is shown in Fig. 2.

4. A transforming from a WMV9 coding signal into other coding signals

4.1 A transform from a WMV9 coding matrix to a DCT coding matrix

A WMV9 coding matrix is transformed to a DCT coding matrix via equations (8) and (1), namely:

$$\mathbf{C_{dct}} = \mathbf{T_{dctwmv9}}\mathbf{C_{wmv9}} = \mathbf{T_{dct}}\mathbf{E_{wmv}}{}^{t}\mathbf{K_{wmv}}\mathbf{K_{wmv}}\mathbf{C_{wmv9}} \quad (\,35\,)\,.$$

That is, the transform matrix $\mathbf{T_{dctwmv}}$ for transforming a WMV9 coding matrix into a DCT coding matrix is:

$$\mathbf{T_{dctwmv}} = \mathbf{T_{dct}}\mathbf{E_{wmv}}{}^{t}\mathbf{K_{wmv}}\mathbf{K_{wmv}} \quad (\,36\,)$$

and can be approximately expressed as:

$$\mathbf{T}_{dctwmv}(T_a, T_b, T_c, T_d, T_e, T_f, T_g) \approx \frac{1}{2^b} \begin{bmatrix} T_a & 0 & 0 & 0 & 0 & 0 & 0 & 0 \\ 0 & T_b & 0 & T_g & 0 & T_d & 0 & -T_f \\ 0 & 0 & T_c & 0 & 0 & 0 & -T_e & 0 \\ 0 & -T_d & 0 & T_b & 0 & T_f & 0 & -T_g \\ 0 & 0 & 0 & 0 & T_a & 0 & 0 & 0 \\ 0 & -T_g & 0 & -T_f & 0 & T_b & 0 & -T_d \\ 0 & 0 & T_e & 0 & 0 & 0 & T_c & 0 \\ 0 & T_f & 0 & T_d & 0 & -T_g & 0 & T_b \end{bmatrix} (37).$$

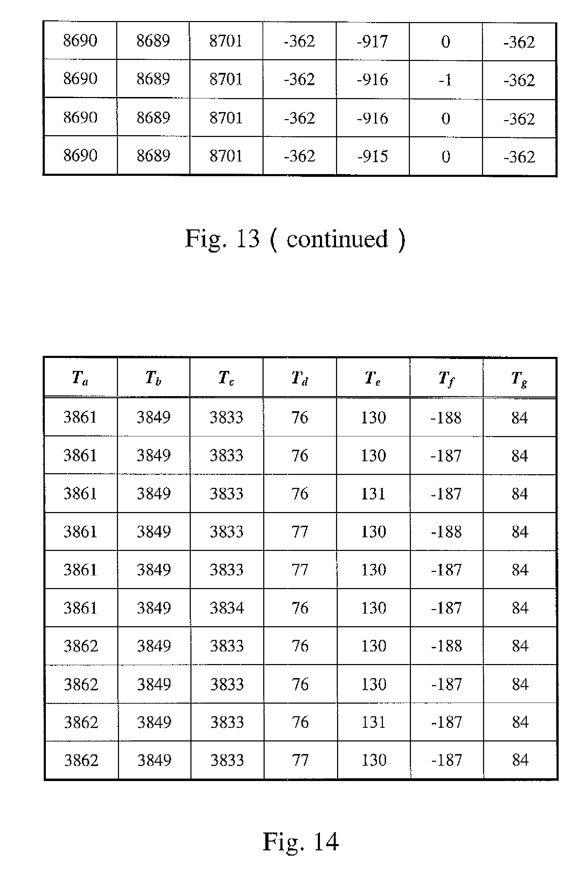

According to the rules, when the coefficients of the input WMV9 coding matrix are 12-bit or more and the b is 17, the values of $T_a$, $T_b$, $T_c$, $T_d$, $T_e$, $T_f$ and $T_g$ should be one of the groups shown in the table in Fig. 14, and the coefficients of the transformed coding matrix $C_{dct}$ should be represented by 15-bit or more, so as to meet the error requirement of the IEEE standard 1180-1990. Preferably, $(T_a, T_b, T_c, T_d, T_e, T_f, T_g) = (3862, 3849, 3833, 76, 130, -187, 84)$, as shown in Fig. 16. A fast transform method is shown in Fig. 2.

4.2 A transform from a WMV9 coding matrix to AVS coding matrix

A WMV9 coding matrix is transformed to an AVS coding c matrix via equations (8) and (3), namely:

$$\mathbf{C_{avs}} = \mathbf{T_{avswmv9}}\mathbf{C_{wmv9}} = \mathbf{K_{avs}}\mathbf{K_{avs}}\mathbf{E_{avs}}\mathbf{E_{wmv}}{}^{t}\mathbf{K_{wmv}}\mathbf{K_{wmv}}\mathbf{C_{wmv9}} \quad (\,38\,)\,.$$

That is, the transform matrix $\mathbf{T_{avswmv}}$ for transforming a WMV9 coding matrix into an AVS coding matrix is:

$$\mathbf{T_{avswmv}} = \mathbf{K_{avs}}\mathbf{K_{avs}}\mathbf{E_{avs}}\mathbf{E_{wmv}}{}^{t}\mathbf{K_{wmv}}\mathbf{K_{wmv}} \quad (\,39\,)$$

and can be approximately expressed as:

$$\mathbf{T}_{avswmv}(T_a,T_b,T_c,T_d,T_e,T_f,T_g) \approx \frac{1}{2^b}\begin{bmatrix} T_a & 0 & 0 & 0 & 0 & 0 & 0 & 0 \\ 0 & T_b & 0 & T_g & 0 & T_d & 0 & -T_f \\ 0 & 0 & T_c & 0 & 0 & 0 & -T_e & 0 \\ 0 & -T_d & 0 & T_b & 0 & T_f & 0 & -T_g \\ 0 & 0 & 0 & 0 & T_a & 0 & 0 & 0 \\ 0 & -T_g & 0 & -T_f & 0 & T_b & 0 & -T_d \\ 0 & 0 & T_e & 0 & 0 & 0 & T_c & 0 \\ 0 & T_f & 0 & T_d & 0 & -T_g & 0 & T_b \end{bmatrix}(40)$$

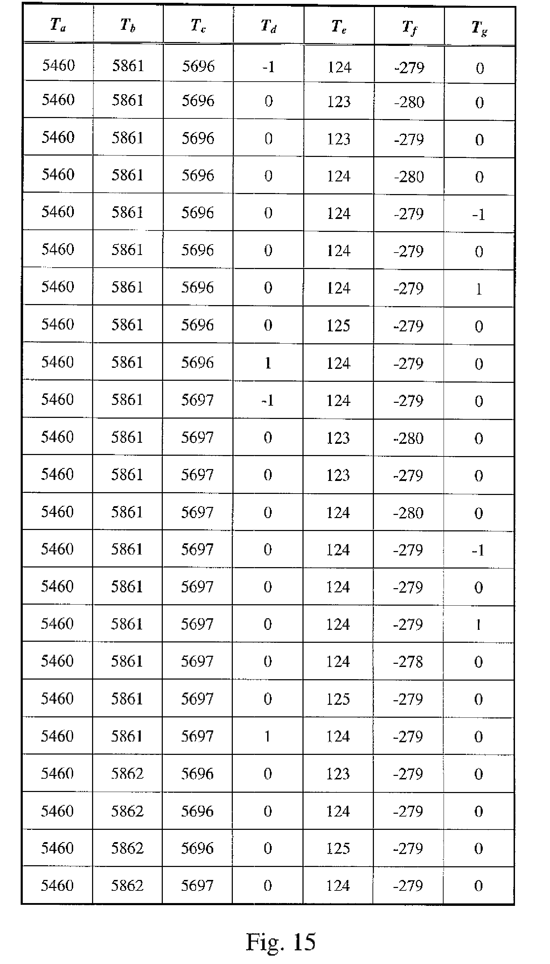

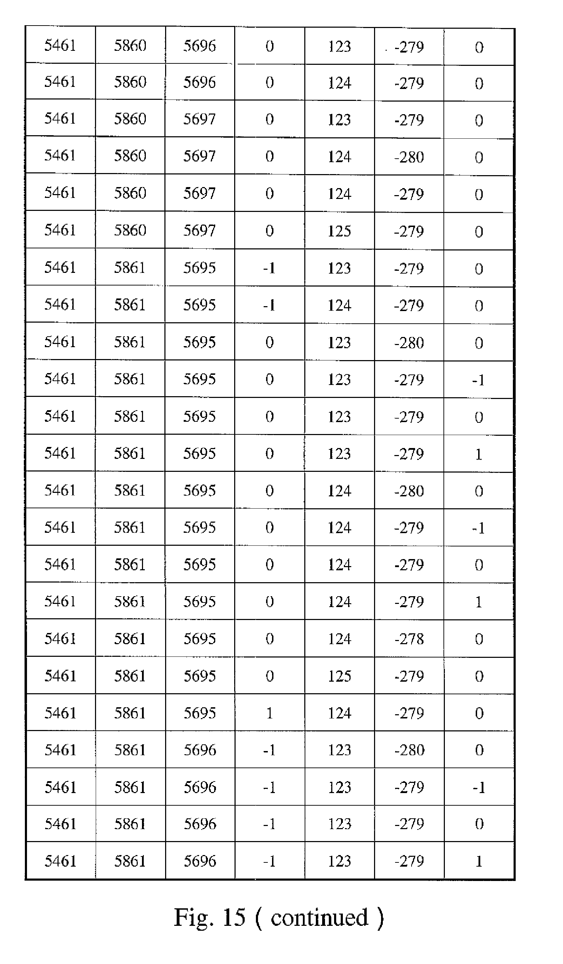

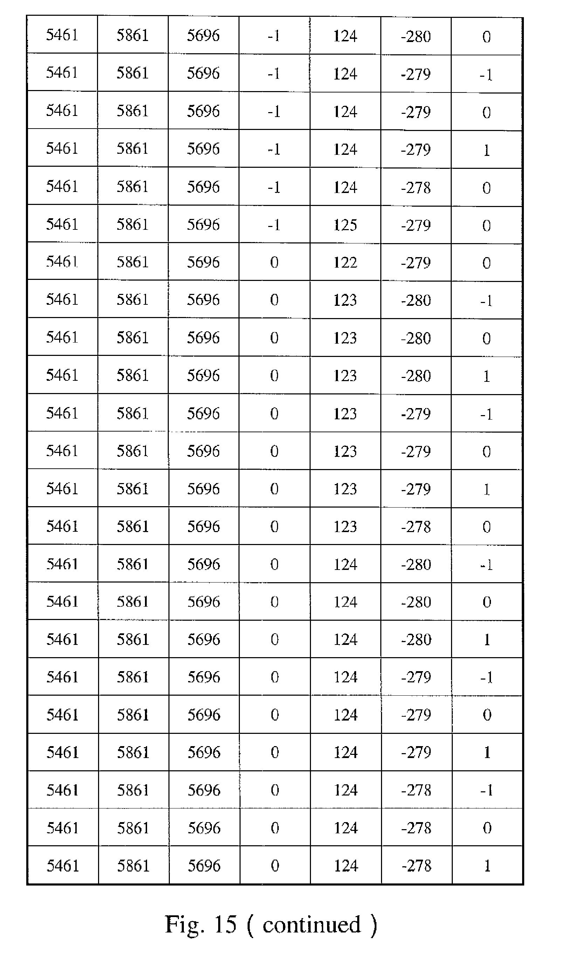

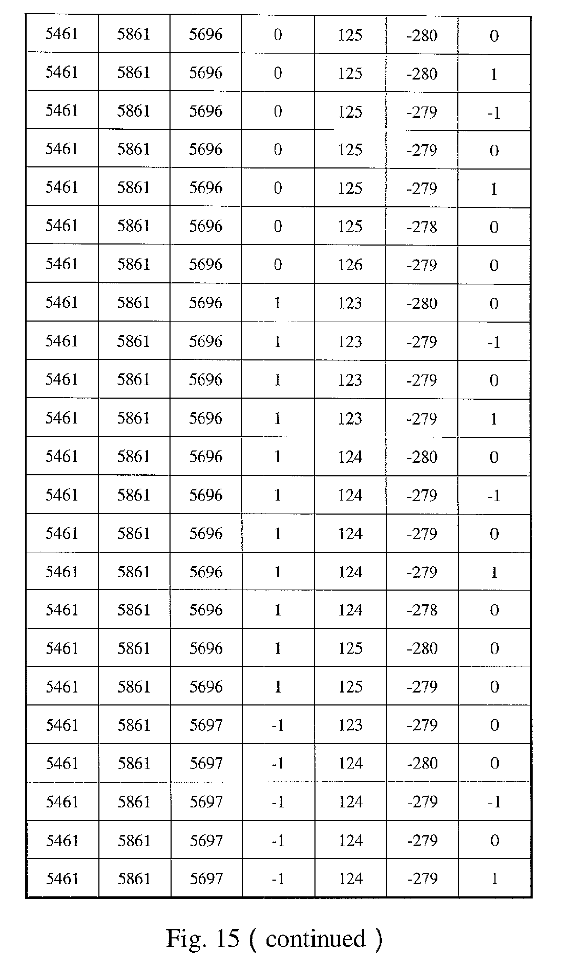

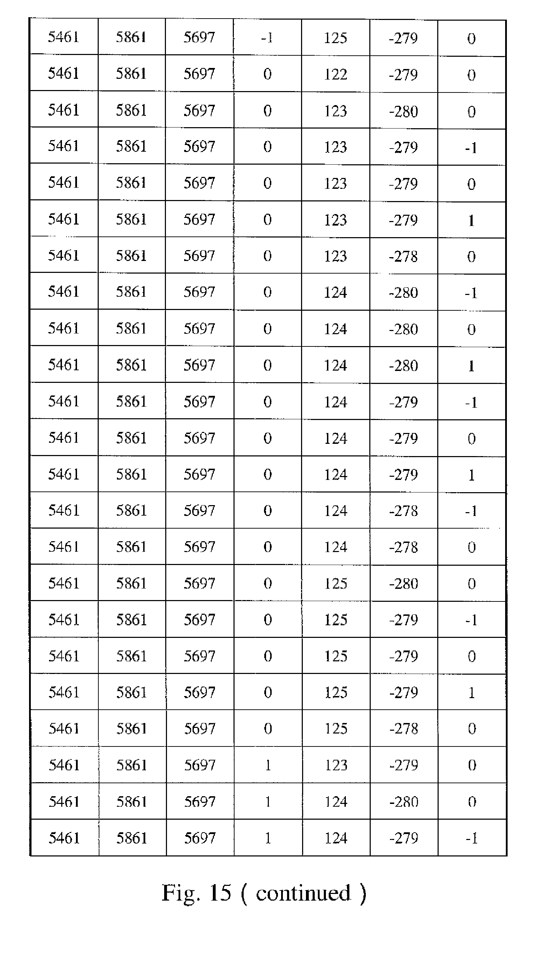

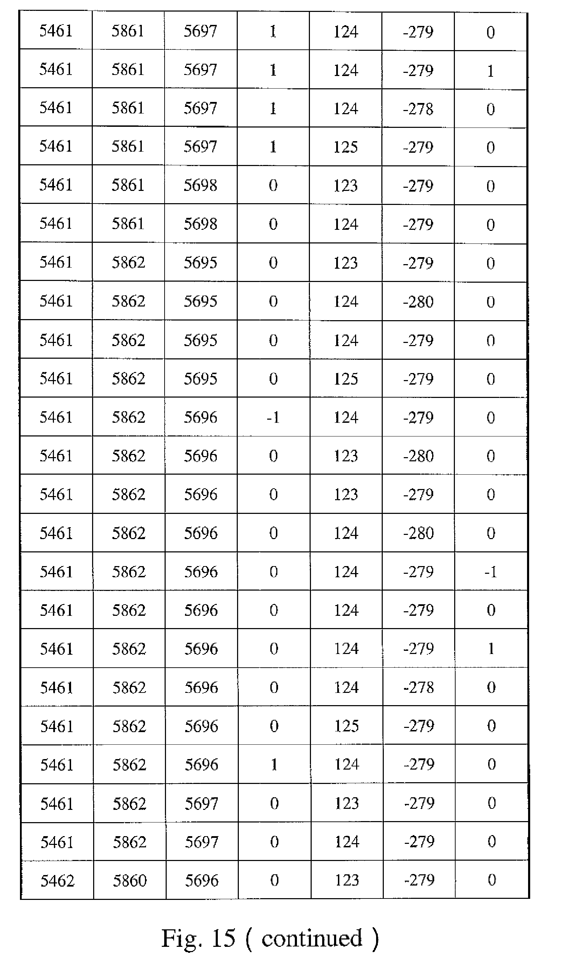

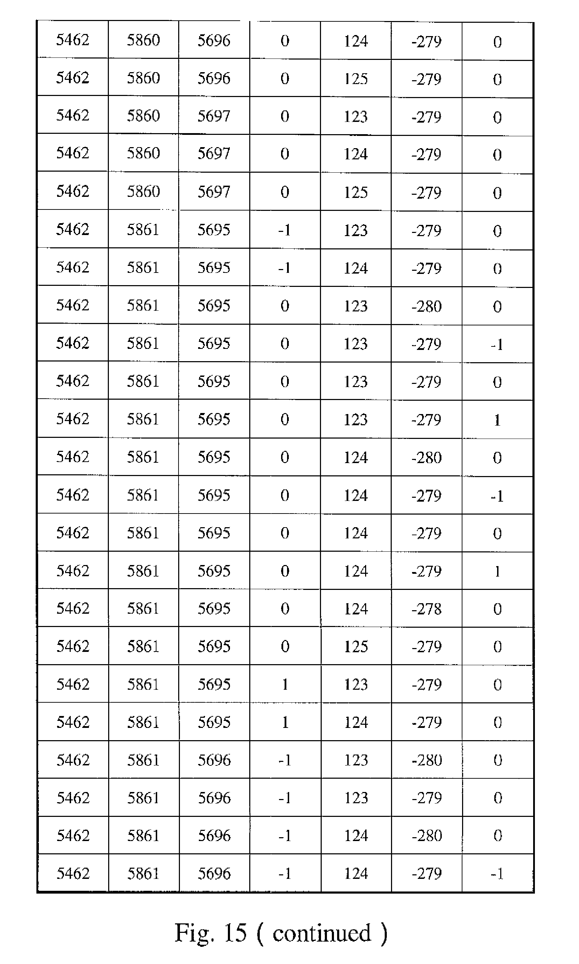

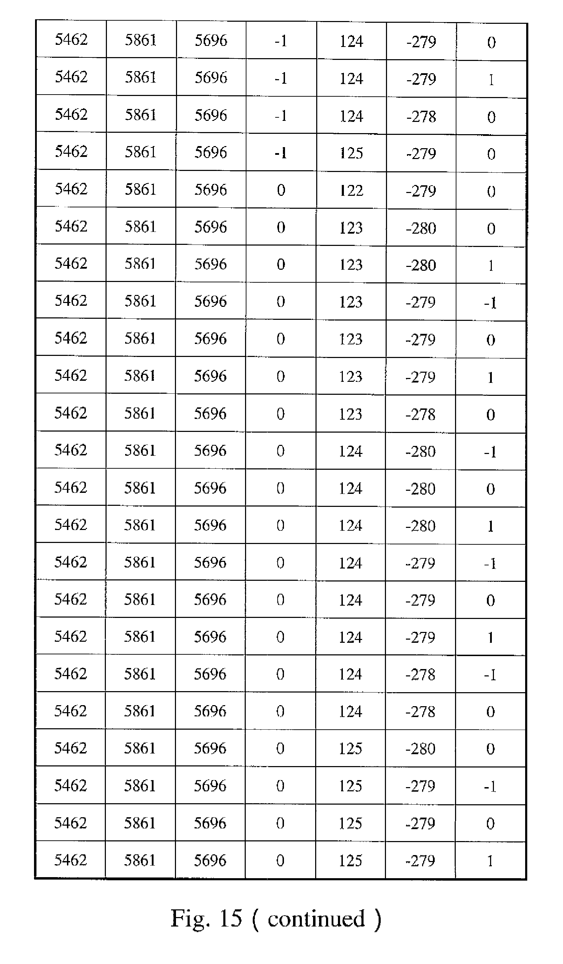

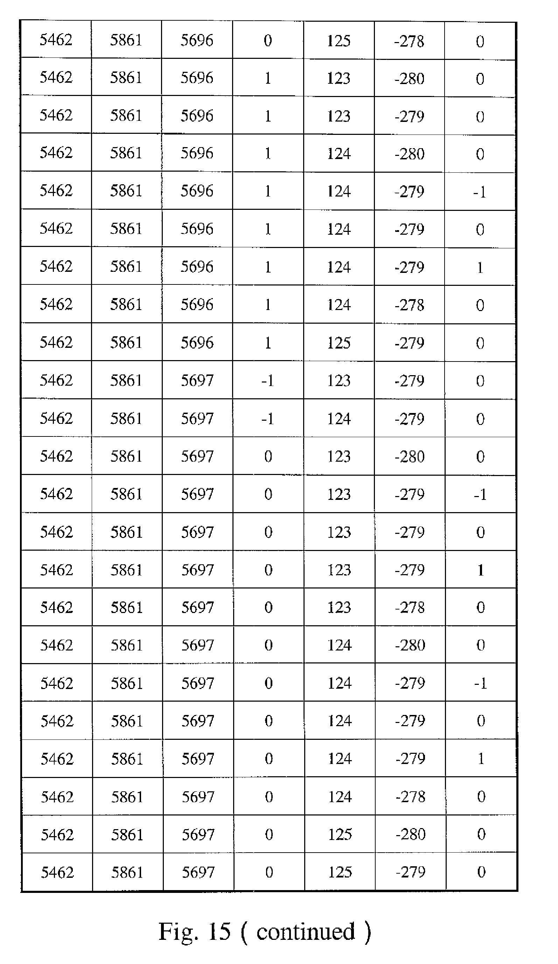

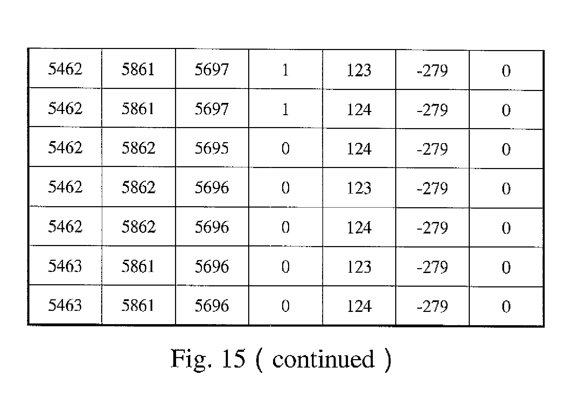

According to the rules, when the coefficients of the input WMV9 coding coefficient are 12-bit or more and the b is 22, the values of $T_a$, $T_b$, $T_c$, $T_d$, $T_e$, $T_f$ and $T_g$ should be one of the groups shown in the table in Fig. 15, and the coefficients of the transformed matrix $C_{avs}$ should be represented by 15-bit or more, so as to meet the error requirement of the IEEE standard 1180-1990. Preferably, $(T_a, T_b, T_c, T_d, T_e, T_f, T_g)$ = (22, 5461, 5861, 0, 124, -279, 0), as shown in Fig. 16. A fast transform method for this transform is shown in Fig. 2.

4.3 A transform from a WMV9 coding matrix to a H.2641AVC coding matrix

A WMV9 coding matrix is transformed to a H.264/AVC coding matrix via equations (8) and (5), namely:

$$\mathbf{C}_{h264} = \mathbf{T}_{h264wmv9}\mathbf{C}_{wmv9} = \mathbf{K}_{h264}\mathbf{E}_{h264}\mathbf{E}_{wmv}{}^{t}\mathbf{K}_{wmv}\mathbf{K}_{wmv}\mathbf{C}_{wmv9} \ (\ 41\ ) \ .$$

That is, the transform matrix $\mathbf{T}_{h264wmv9}$ for transforming a WMV9 coding matrix into a H.264/AVC coding matrix is:

$$\mathbf{T}_{h264wmv} = \mathbf{K}_{h264}\mathbf{E}_{h264}\mathbf{E}_{wmv}{}^{t}\mathbf{K}_{wmv}\mathbf{K}_{wmv} \qquad (\ 42\ )$$

and can be approximately expressed as:

$$\mathbf{T}_{avswmv}(T_a,T_b,T_c,T_d,T_e,T_f,T_g) \approx \frac{1}{2^b}\begin{bmatrix} T_a & 0 & 0 & 0 & 0 & 0 & 0 & 0 \\ 0 & T_b & 0 & T_g & 0 & T_d & 0 & -T_f \\ 0 & 0 & T_c & 0 & 0 & 0 & -T_e & 0 \\ 0 & -T_d & 0 & T_b & 0 & T_f & 0 & -T_g \\ 0 & 0 & 0 & 0 & T_a & 0 & 0 & 0 \\ 0 & -T_g & 0 & -T_f & 0 & T_b & 0 & -T_d \\ 0 & 0 & T_e & 0 & 0 & 0 & T_c & 0 \\ 0 & T_f & 0 & T_d & 0 & -T_g & 0 & T_b \end{bmatrix}(43).$$

According to the rules, when the coefficients of the input WMV9 coding matrix are 12-bit or more and the b is 16, the coefficients of the transformed coding matrix $C_{wmv}$ should be represented by 15 bits. Preferably, $(T_a, T_b, T_c, T_d, T_e, T_f, T_g)$ = (1931, 1924, 1907, 80, 201, 0, 80). A fast transform method for this transform is shown in Fig. 2.

The transform between DCT coding coefficients and ICT coding coefficients as well as the transforms among three different ICT coding coefficients are given from the point of view of mathematics. Accordingly, a device for transform of coding coefficients of video signals is illustrated according to the invention with reference to drawings.

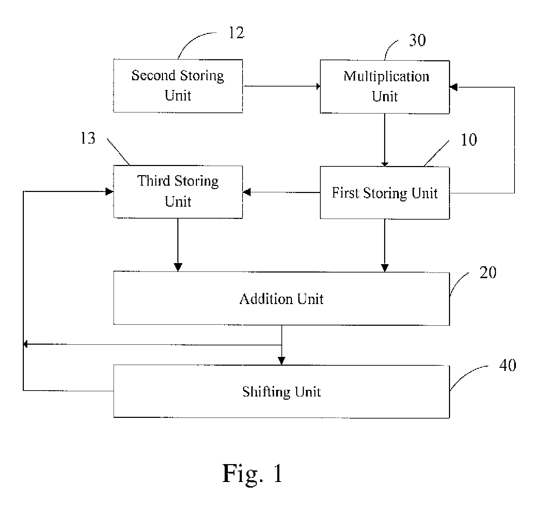

Fig. 1 is a block diagram for showing a device 100 for transform of coding coefficients according to one preferable embodiment of the present invention, comprising a first storage unit 10, a second storage unit 12, a third storage unit 13, a multiplication unit 30, an addition unit 20 and a shifting unit 40.

The device 100 will be described by taking the transform from DCT coding coefficients to AVS coding coefficients as an example.

The first storage unit 10 stores coding coefficients to be transformed, i.e., coding coefficients of input signals, which are extracted from input video. In the embodiment, the stored coding coefficients are represented as a coding matrix $C_{det}$.

The second storage unit 12 stores the transform matrix, i.e., the transform matrix $T_{avsdct}$ for the transform from DCT coding coefficients to AVS coding coefficients in this embodiment. In this embodiment, $T_{avsdct}$ is set as $(T_a, T_b, T_c, T_d, T_e, T_f, T_g) = (5793, 6232, 6048, -130, -74, 7, -130)$. Values in the matrix are variable according to different transform methods and accuracies. For example, the matrix for the transform from AVS coding coefficients to DCT coding coefficients may take values of $T_a, T_b, T_c, T_d, T_e, T_f$ and $T_g$ from one of the groups in Fig. 10.

In one embodiment of the present invention, said transform matrix stored in the second storage unit and the coding coefficients stored in the first storage unit are loaded manually. That is, coding modes for input signals and output signals are designated prior to the transform. Then, coding coefficients and transform matrixes are loaded based on the designated coding modes. It will be appreciated for those skilled in the art that various manners may be used to store and read coding coefficients and the transform matrixes, for example, stored in a known storage device and read out via a preset program. Optionally, all values of the coding coefficients and the transform matrixes may be programmed into program codes and used by presetting in the program codes.

The multiplication unit 30 multiplies the coding coefficients stored in the first storing unit 10 by the transform matrix stored in the second storing unit 12 and outputs the multiplication result into the first storing unit 10 for storage. Alternatively, the multiplication result may be stored in other storing units.

The third storage unit 13 stores intermediate results rendered by operations of the addition unit 20 and the shifting unit 40 as well as the final result of the transform. Specifically, the third storage unit 13 is reset before the transform. The addition unit 20 adds up the results stored in the first and the third storage units, and outputs of the addition unit 20 temperately stores in the third storage unit 13.

The shifting unit 40 performs a shifting operation on values stored in the third storage unit 13, In this embodiment, the shifting unit 40 shifts the result stored in the third storage unit 13 right by predetermined bits. The shifting results are also stored in the third storage unit 13. As a result, what finally stores in the third storage unit 13 are just the transformed coefficients, i.e., the AVS coding matrix $C_{avs}$.

Although the device 100 is described with reference to the transform from DCT coding coefficients to AVS coding coefficients, it will be understandable for those skilled in the art that, with respect to various transforms between coding coefficients of different coding modes, the order of operations of units in the device 100 may different. For example, when performing a transform from DCT coding coefficients to H.264/AVC coding coefficients, the addition unit 20 performs one more addition operation after shifting operation performed by shifting unit 40. Another example is, when coding matrix $C_{h2642}$ for H.264/AVC are calculated, the multiplication unit 30 multiplies coding matrix $T_c$ by $C_{dct2}$ and multiplies $T_e$ by $C_{dct6}$ firstly. The addition unit 20 adds up the results of two muliplying operations. Then, the shifting unit 40 performs shifting operation on the addition result of the addtion device 20. Finally, the addition unit 20 adds up the shifting result of the shifting means 40 and coding matrix $C_{dct2}$ so as to obtain coding matrix $C_{h2642}$. This procedure may be represented by an equation of signal flow:

$$C_{h2642} = ( T_c * C_{dct2} - T_e * C_{dct6} ) >> b + C_{dct2.}$$

Hereinafter, steps for transform among coefficients of various coding modes performed by the device 100 will be described in detail.

Signal flow graphs of various coding coefficient transform methods will be described below by illustration, so as to clearly show how the transforms among coefficients of various coding modes are achieved in the preferable embodiment of the present invention.

Fig. 2 is a signal flow graph for showing a method for a fast transform of coding coefficients according to one embodiment of the present invention. Fig. 3 is a signal flow graph for showing a method for a fast transform from DCT coding coefficients to H.264/AVC coding coefficients according to another embodiment of the present invention. The fast transform may be simplified if a portion of the coefficients is zero, which may be shown in the transform from AVS to WMV9 in Fig. 4 and the transform from H.2641AVC to DCT in Fig. 5.

Referring to Fig. 2, the transform from DCT coding coefficients to AVS coding coefficients may be described as follows:

$$C_{avs0} = C_{dct0} * T_a >> b$$

$$C_{avs4} = C_{dct4} * T_a >> b$$

$$C_{avs2} = ( T_c * C_{dct2} - T_e * C_{dct6} ) >> b$$

$$C_{avs6} = ( T_c * C_{dct6} + T_e * C_{dct2} ) >> b$$

$$C_{avs1} = ( T_b * C_{dct1} + T_g * C_{dct3} + T_d * C_{dct5} - T_f * C_{dct7} ) >> b$$

$$C_{avs3} = ( -T_d * C_{dct1} + T_b * C_{dct3} + T_f * C_{dct5} - T_g * C_{dct7} ) >> b$$

$$C_{avs5} = ( -T_g * C_{dct1} - T_f * C_{dct3} + T_b * C_{dct5} + T_d * C_{dct7} ) >> b$$

$$C_{avs7} = ( T_f * C_{dct1} + T_d * C_{dct3} - T_g * C_{dct5} + T_b * C_{dct7} ) >> b.$$

Rreferring to Fig. 3, the transform from DCT coding coefficients to H.264/AVC coding coefficients may be described as follows:

$$C_{h2640} = C_{dct0} * T_a >> b + C_{dct0}$$

$$C_{h2644} = C_{dct4} * T_a >> b + C_{dct4}$$

$$C_{h2642} = ( T_c * C_{dct2} - T_e * C_{dct6} ) >> b + C_{dct2}$$

$$C_{h2646} = ( T_c * C_{dct6} + T_e * C_{dct2} ) >> b + C_{dct6}$$

$$C_{h2641} = ( T_b * C_{dct1} + T_g * C_{dct3} + T_d * C_{dct5} - T_f * C_{dct7} ) >> b + C_{dct1}$$

$$C_{h2643} = ( -T_d * C_{dct1} + T_b * C_{dct3} + T_f * C_{dct5} - T_g * C_{dct7} ) >> b + C_{dct3}$$

$$C_{h2645} = \left( -T_g * C_{dct1} \quad -T_f * C_{dct3} \quad +T_b * C_{dct5} \quad +T_d * C_{dct7} \right) >> b + C_{dct5}$$

$$C_{h2647} = \left( T_f * C_{dct1} \quad +T_d * C_{dct3} \quad -T_g * C_{dct5} \quad +T_b * C_{dct7} \right) >> b + C_{dct7}$$

wherein the symbol ">>b" represents shifting right by $b$ bits.

Hereinafter, a transform from DCT coding coefficients to AVS coding coefficients (referred to as "forward transform") is described with reference to Figs. 1 and 2, respectively, wherein calculating $C_{avs7}$ is exemplified, comprising steps of

1) resetting the third storage unit;

2) loading DCT coding matrix $C_{dct}$ of signals compressed by DCT into the first storage unit 10;

3) loading a transform matrix $T_{avsdc}$ into the second storage unit 12;

4) multiplying the DCT coding matrix $C_{dct}$ in the first storage unit 10 by the transform matrix $T_{avsdc}$ in the second storage unit, namely, the multiplication unit 30 performs $T_f * C_{det1}$, and storing the multiplication result in the first storage unit 10;

5) adding up the values stored in the first and third storage units, namely, the addition unit 20 adds $T_d * C_{dct3}$, $-T_g * C_{dct5}$ and $T_b * C_{dct7}$, and storing the result of addition in the third storage unit 13; and

6) shifting the result of step 5) right by predetermined bits (i.e., b bits) and storing the shifted result $C_{avs7}$ in the third storage unit 13.

In steps 2) and 3), the loading may be performed one parameter by one parameter in $C_{dct}$ and $T_{avsdct}$. Alternatively, all parameters in $C_{dct}$ and $T_{avsdct}$ may be loaded at one time. It will be appreciated that, when the loading is done one by one, steps 2) to 5) should be repeated. For example, $T_f$ and $C_{det1}$ are loaded firstly and multiplied in step 4). The multiplication result is then stored in the first storage unit 10. In step 5), this multiplication result is added to the value stored in the third storage unit 13 and the procedure then returns to step 2) to perform operations on the rest parameters.

A transform from the AVS coding coefficients to the DCT coding coefficients (referred to "reverse transform") is similar to the above-mentioned forward transform. In view of the foregoing description and Fig. 3, the reverse transform is apparent for those skilled in the art.

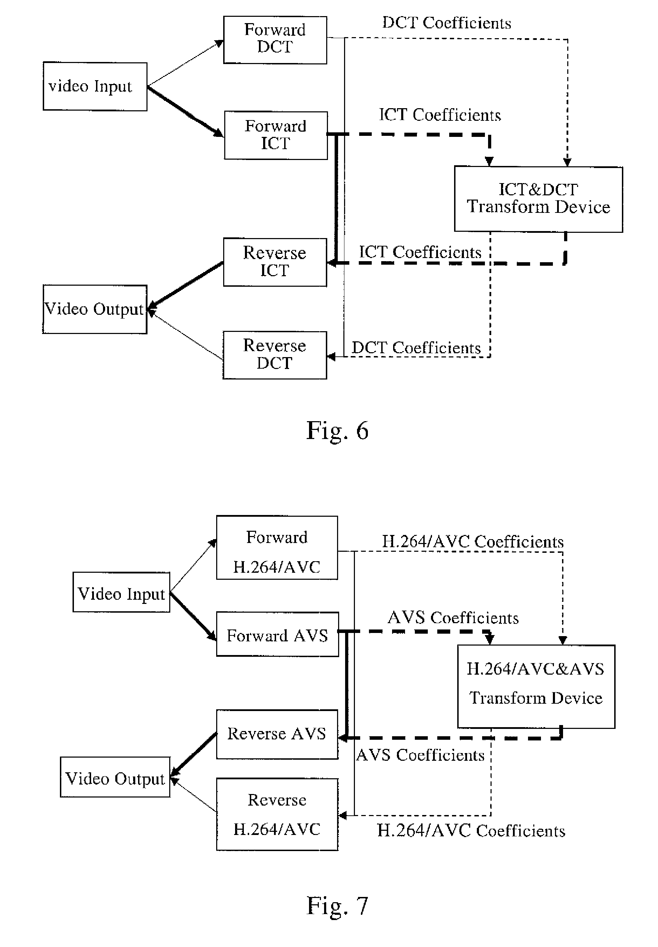

Fig. 6 schematically shows a fast transform between DCT coding coefficients and ICT coding coefficients, wherein thick solid lines and thin solid lines show a conventional ICT process and a DCT process, respectively. Conventionally, the coding coefficients for the two processes are not exchangeable. However, the present invention can realize the exchange of coding coefficients of two processes. Specifically, when input video signals are compressed into digital video data by DCT (forward DCT transform), DCT coding coefficients are extracted from the video data (as shown by the thin dashed line) and transformed to ICT coding coefficients (as shown by the thick dashed line). The video signals with ICT coding coefficients are decoded (inverse ICT transform) and then output. Extracting DCT coding coefficients from video data is known to the art and thus is not described in detail.

Fig. 7 schematically shows a fast transform between a H.264/AVC coding coefficient and an AVS coding coefficient according to the present invention, wherein thick solid line and thin solid line show a conventional H.264/AVC process and an AVS process, respectively. Conventionally, the coding coefficients for the two processes are not exchangeable. However, the present invention can realize the exchange of coding coefficients of two processes. Specifically, when input video signals are compressed into digital video data by H.264/AVC (forward H.264/AVC transform), H.264/AVC coding coefficients are extracted from the video data (as shown by the thick dashed line) and transformed to AVS coding coefficients (as shown by the thin dashed line). The AVS coding coefficients are decoded (inverse AVS transform) and then output. Similarly, when the input video signals are compressed into digital video data by AVS (forward AVS transform), the AVS coding coefficients are extracted from the video data (as shown by the thick dashed line) and transformed to H.264/AVC coding coefficients (as shown by the thin dashed line). The H.264/AVC coding coefficients are decoded (inverse H.264/AVC transform) and then output. Other transforms, such as that between H.264 and MSWM9 as well as that between AVS and MSWM9, may be performed by similar methods, and are thus not described in detail.

Though embodiments and implementations of the invention have been shown and described, it should be apparent that many more embodiments and implementations are within the scope of the invention. Accordingly, the invention is not to be restricted, except in light of the claims and their equivalents.

**Claims**

1. A device for transforming video signals with first coding coefficients of into video signals with second coding coefficients, comprising:

   a first storage unit configured to store the first coding coefficients;
   a second storage unit configured to store a transform matrix;
   a multiplication unit configured to perform a multiplication operation for the first coding coefficients and the transform matrix;
   an addition unit configured to add values resulted from the multiplication operation; and
   a shifting unit configured to shift values resulted from the addition unit to obtain the second coding coefficients.

2. The device according to claim 1, wherein the first coding coefficients are DCT video coding coefficients and the second coding coefficients are ICT video coding coefficients.

3. The device according to claim 1, wherein the first coding coefficients are ICT video coding coefficients and the second coding coefficients are ICT video coding coefficients different from the first coding coefficients.

4. The device according to claim 1, wherein the first coding coefficients are ICT video coding coefficients and the second coding coefficients are DCT video coding coefficients.

5. The device according to claim 2, 3 or 4, wherein the ICT video coding coefficients comply with one of International Standards of WMV9, AVS and H.264/AVC.

6. The device according to claim 5, wherein the transform matrix is set up such that an error between a first signal vector and a second signal vector meet the error-requirement of the IEEE standard 1180-1990, wherein the first signal vector is transformed from the first coding coefficients by using a reverse coding in accordance with the error-requirement provided in IEEE standard 1180-1990, and the second signal vector is transformed from the second coding coefficients by using a reverse coding in accordance with the error-requirement provided in IEEE standard 1180-1990.

7. The device according to claim 6, wherein the ICT video coding coefficients make up of an eight-order ICT coding matrix.

8. The device according to claim 7, further comprising:

   a third storage unit configured to store outputs from the addition unit and from the shifting unit.

9. The device according to claim 8, wherein the shifting unit shifts the values resulted from the addition unit right by 17, 13, 15, 8, 0, 12, 22 or 16 bits.

10. The device according to claim 9, wherein the second coding coefficients are 15-bit.

11. A method for transforming video signals with first coding coefficients into video signals with second coding coefficients, comprising:

    loading the first coding coefficients and a transform matrix;
    multiplying the first coding coefficients by the transform matrix;
    adding values resulted from the multiplication operation; and
    shifting values resulted from the adding operation to obtain the second coding coefficients.

12. The method according to claim 11, wherein the first coding coefficients are DCT video coding coefficients and the second coding coefficients are ICT video coding coefficients.

13. The method according to claim 11, wherein the first coding coefficients are ICT video coding coefficients and the second coding coefficients are ICT video coding coefficients different from the first coding coefficients.

14. The method according to claim 11, wherein the first coding coefficients are ICT video coding coefficients and the second coding coefficients are DCT video coding coefficients.

15. The method according to claim 12, 13 or 14, wherein the ICT video coding coefficients comply with one of International Standards of WMV9, AVS and H.264/AVC.

16. The method according to claim 15, wherein the transform matrix is set up such that an error between a first signal vector and a second signal vector meet the error-requirement of the IEEE standard 1180-1990, wherein the first signal vector is transformed from the first coding coefficients by using a reverse coding in accordance with the error-requirement provided in IEEE standard 1180-1990, and the second signal vector is transformed from the second coding coefficients by using a reverse coding in accordance with the error-requirement provided in IEEE standard 1180-1990.

17. The method according to claim 16, wherein the ICT video coding coefficients make up of an eight-order ICT coding matrix.

18. The method according to claim 17, wherein the shifting further comprises:

shifting values resulted from the adding operation right by 17, 13, 15, 8, 0, 12, 22 or 16 bits to obtain the second coding coefficients.

19. The method according to claim 18, wherein the second coding coefficients are 15-bit.

20. The method according to claim 11, further comprising:

storing the first coding coefficients, the transform matrix, and each of values resulted from the multiplying, adding and shifting.

Fig. 1

Fig. 2

Fig. 3

Fig. 4

$C_{in0}$ ——————————————————→ $C_{out0}$

$C_{in4}$ ——————————————————→ $C_{out4}$

$C_{in2}$ ——— $T_c$ ———→ $\gg b$ ——— $+C_{in2}$ ——→ $C_{out2}$
             $-T_e$
             $T_e$
$C_{in6}$ ——— $T_c$ ———→ $\gg b$ ——— $+C_{in6}$ ——→ $C_{out6}$

$C_{in1}$ ——— $T_b$ ———→ $\gg b$ ——— $+C_{in1}$ ——→ $C_{out1}$
     $-T_d$
$T_f$ $-T_g$
     $T_g$ $T_b$
$C_{in3}$ ———————→ $\gg b$ ——— $+C_{in3}$ ——→ $C_{out3}$
     $-T_f$
$T_d$
$T_d$ $T_f$ $T_b$
$C_{in5}$ ———————→ $\gg b$ ——— $+C_{in5}$ ——→ $C_{out5}$
$-T_g$
$-T_f$ $-T_g$
     $-T_d$
$C_{in7}$ ——— $T_b$ ———→ $\gg b$ ——— $+C_{in7}$ ——→ $C_{out7}$

Fig. 5

Fig. 6

Fig. 7

| $T_a$ | $T_b$ | $T_c$ | $T_d$ | $T_e$ | $T_f$ | $T_g$ |
|-------|-------|-------|-------|-------|-------|-------|
| 0 | -13 | -22 | 178 | 581 | 398 | 162 |
| 0 | -13 | -21 | 178 | 580 | 398 | 161 |
| 0 | -13 | -21 | 178 | 580 | 398 | 162 |
| 0 | -13 | -21 | 178 | 581 | 398 | 161 |
| 0 | -13 | -21 | 178 | 581 | 398 | 162 |
| 0 | -13 | -20 | 178 | 580 | 398 | 162 |
| 0 | -13 | -20 | 178 | 581 | 398 | 162 |
| 1 | -13 | -22 | 178 | 580 | 398 | 162 |
| 1 | -13 | -21 | 178 | 580 | 398 | 162 |
| 1 | -13 | -21 | 178 | 581 | 398 | 162 |

Fig. 8

| $T_a$ | $T_b$ | $T_c$ | $T_d$ | $T_e$ | $T_f$ | $T_g$ |
|---|---|---|---|---|---|---|
| 8688 | 8690 | 8743 | -190 | -297 | 423 | -172 |
| 8688 | 8690 | 8744 | -190 | -298 | 423 | -172 |
| 8688 | 8690 | 8744 | -190 | -297 | 423 | -172 |
| 8688 | 8690 | 8744 | -190 | -296 | 423 | -172 |
| 8689 | 8689 | 8744 | -190 | -297 | 423 | -172 |
| 8689 | 8690 | 8742 | -190 | -297 | 423 | -172 |
| 8689 | 8690 | 8743 | -191 | -298 | 423 | -172 |
| 8689 | 8690 | 8743 | -191 | -297 | 423 | -173 |
| 8689 | 8690 | 8743 | -191 | -297 | 423 | -172 |
| 8689 | 8690 | 8743 | -191 | -296 | 423 | -172 |
| 8689 | 8690 | 8743 | -190 | -298 | 423 | -173 |
| 8689 | 8690 | 8743 | -190 | -298 | 423 | -172 |
| 8689 | 8690 | 8743 | -190 | -298 | 424 | -172 |
| 8689 | 8690 | 8743 | -190 | -297 | 422 | -172 |
| 8689 | 8690 | 8743 | -190 | -297 | 423 | -173 |
| 8689 | 8690 | 8743 | -190 | -297 | 423 | -172 |
| 8689 | 8690 | 8743 | -190 | -297 | 423 | -171 |
| 8689 | 8690 | 8743 | -190 | -297 | 424 | -173 |
| 8689 | 8690 | 8743 | -190 | -297 | 424 | -172 |
| 8689 | 8690 | 8743 | -190 | -296 | 423 | -173 |
| 8689 | 8690 | 8743 | -190 | -296 | 423 | -172 |

Fig. 9

| | | | | | | |
|------|------|------|------|------|-----|------|
| 8689 | 8690 | 8743 | -190 | -296 | 424 | -172 |
| 8689 | 8690 | 8743 | -189 | -297 | 423 | -173 |
| 8689 | 8690 | 8743 | -189 | -297 | 423 | -172 |
| 8689 | 8690 | 8744 | -191 | -298 | 423 | -172 |
| 8689 | 8690 | 8744 | -191 | -297 | 423 | -173 |
| 8689 | 8690 | 8744 | -191 | -297 | 423 | -172 |
| 8689 | 8690 | 8744 | -191 | -296 | 423 | -172 |
| 8689 | 8690 | 8744 | -190 | -298 | 422 | -172 |
| 8689 | 8690 | 8744 | -190 | -298 | 423 | -173 |
| 8689 | 8690 | 8744 | -190 | -298 | 423 | -172 |
| 8689 | 8690 | 8744 | -190 | -298 | 424 | -172 |
| 8689 | 8690 | 8744 | -190 | -297 | 422 | -173 |
| 8689 | 8690 | 8744 | -190 | -297 | 422 | -172 |
| 8689 | 8690 | 8744 | -190 | -297 | 423 | -173 |
| 8689 | 8690 | 8744 | -190 | -297 | 423 | -172 |
| 8689 | 8690 | 8744 | -190 | -297 | 424 | -173 |
| 8689 | 8690 | 8744 | -190 | -297 | 424 | -172 |
| 8689 | 8690 | 8744 | -190 | -296 | 422 | -172 |
| 8689 | 8690 | 8744 | -190 | -296 | 423 | -173 |
| 8689 | 8690 | 8744 | -190 | -296 | 423 | -172 |
| 8689 | 8690 | 8744 | -190 | -296 | 424 | -172 |
| 8689 | 8690 | 8744 | -189 | -297 | 423 | -173 |

Fig. 9 ( continued )

| | | | | | | |
|---|---|---|---|---|---|---|
| 8689 | 8690 | 8744 | -189 | -297 | 423 | -172 |
| 8689 | 8690 | 8745 | -190 | -297 | 423 | -173 |
| 8689 | 8690 | 8745 | -190 | -297 | 423 | -172 |
| 8689 | 8690 | 8745 | -190 | -296 | 423 | -172 |
| 8689 | 8691 | 8743 | -190 | -297 | 423 | -173 |
| 8689 | 8691 | 8743 | -190 | -297 | 423 | -172 |
| 8690 | 8689 | 8743 | -190 | -297 | 423 | -172 |
| 8690 | 8689 | 8744 | -190 | -298 | 423 | -172 |
| 8690 | 8689 | 8744 | -190 | -297 | 423 | -173 |
| 8690 | 8689 | 8744 | -190 | -297 | 423 | -172 |
| 8690 | 8689 | 8744 | -190 | -296 | 423 | -172 |
| 8690 | 8690 | 8742 | -190 | -298 | 423 | -172 |
| 8690 | 8690 | 8742 | -190 | -297 | 423 | -173 |
| 8690 | 8690 | 8742 | -190 | -297 | 423 | -172 |
| 8690 | 8690 | 8742 | -190 | -296 | 423 | -172 |
| 8690 | 8690 | 8743 | -191 | -298 | 423 | -172 |
| 8690 | 8690 | 8743 | -191 | -297 | 423 | -173 |
| 8690 | 8690 | 8743 | -191 | -297 | 423 | -172 |
| 8690 | 8690 | 8743 | -191 | -296 | 423 | -172 |
| 8690 | 8690 | 8743 | -190 | -298 | 422 | -172 |
| 8690 | 8690 | 8743 | -190 | -298 | 423 | -173 |
| 8690 | 8690 | 8743 | -190 | -298 | 423 | -172 |

Fig. 9 ( continued )

| | | | | | | |
|---|---|---|---|---|---|---|
| 8690 | 8690 | 8743 | -190 | -298 | 424 | -172 |
| 8690 | 8690 | 8743 | -190 | -297 | 422 | -172 |
| 8690 | 8690 | 8743 | -190 | -297 | 423 | -173 |
| 8690 | 8690 | 8743 | -190 | -297 | 423 | -172 |
| 690 | 8690 | 8743 | -190 | -297 | 423 | -171 |
| 8690 | 8690 | 8743 | -190 | -297 | 424 | -173 |
| 8690 | 8690 | 8743 | -190 | -297 | 424 | -172 |
| 8690 | 8690 | 8743 | -190 | -296 | 422 | -172 |
| 8690 | 8690 | 8743 | -190 | -296 | 423 | -173 |
| 8690 | 8690 | 8743 | -190 | -296 | 423 | -172 |
| 8690 | 8690 | 8743 | -190 | -296 | 424 | -172 |
| 8690 | 8690 | 8743 | -189 | -298 | 423 | -172 |
| 8690 | 8690 | 8743 | -189 | -297 | 423 | -173 |
| 8690 | 8690 | 8743 | -189 | -297 | 423 | -172 |
| 8690 | 8690 | 8743 | -189 | -296 | 423 | -172 |
| 8690 | 8690 | 8744 | -191 | -298 | 423 | -172 |
| 8690 | 8690 | 8744 | -191 | -297 | 423 | -173 |
| 8690 | 8690 | 8744 | -191 | -297 | 423 | -172 |
| 8690 | 8690 | 8744 | -191 | -296 | 423 | -172 |
| 8690 | 8690 | 8744 | -190 | -298 | 423 | -173 |
| 8690 | 8690 | 8744 | -190 | -298 | 423 | -172 |
| 8690 | 8690 | 8744 | -190 | -298 | 424 | -172 |
| 8690 | 8690 | 8744 | -190 | -297 | 422 | -172 |

Fig. 9 ( continued )

| 8690 | 8690 | 8744 | -190 | -297 | 423 | -173 |
|------|------|------|------|------|-----|------|
| 8690 | 8690 | 8744 | -190 | -297 | 423 | -172 |
| 8690 | 8690 | 8744 | -190 | -297 | 424 | -173 |
| 8690 | 8690 | 8744 | -190 | -297 | 424 | -172 |
| 8690 | 8690 | 8744 | -190 | -296 | 423 | -173 |
| 8690 | 8690 | 8744 | -190 | -296 | 423 | -172 |
| 8690 | 8690 | 8744 | -190 | -296 | 424 | -172 |
| 8690 | 8690 | 8744 | -189 | -297 | 423 | -172 |
| 8690 | 8691 | 8743 | -190 | -297 | 423 | -172 |
| 8691 | 8690 | 8743 | -190 | -297 | 423 | -173 |
| 8691 | 8690 | 8743 | -190 | -297 | 423 | -172 |
| 8691 | 8690 | 8743 | -190 | -296 | 423 | -172 |

Fig. 9 ( continued )

| $T_a$ | $T_b$ | $T_c$ | $T_d$ | $T_e$ | $T_f$ | $T_g$ |
|-------|-------|-------|-------|-------|-------|-------|
| 2896 | 2690 | 2757 | 56 | 33 | -3 | 56 |
| 2896 | 2690 | 2757 | 56 | 34 | -3 | 56 |
| 2896 | 2690 | 2758 | 56 | 33 | -3 | 56 |
| 2897 | 2690 | 2757 | 56 | 33 | -3 | 56 |

Fig. 10

| $T_a$ | $T_b$ | $T_c$ | $T_d$ | $T_e$ | $T_f$ | $T_g$ |
|---|---|---|---|---|---|---|
| 5792 | 5367 | 5495 | 234 | 457 | 255 | 213 |
| 5792 | 5367 | 5495 | 234 | 457 | 256 | 213 |
| 5792 | 5367 | 5495 | 234 | 458 | 255 | 213 |
| 5792 | 5367 | 5495 | 234 | 458 | 256 | 213 |
| 5792 | 5367 | 5495 | 234 | 459 | 255 | 213 |
| 5792 | 5367 | 5495 | 234 | 459 | 256 | 213 |
| 5792 | 5367 | 5495 | 235 | 458 | 255 | 213 |
| 5792 | 5367 | 5495 | 235 | 458 | 256 | 213 |
| 5792 | 5367 | 5496 | 234 | 457 | 255 | 213 |
| 5792 | 5367 | 5496 | 234 | 457 | 256 | 213 |
| 5792 | 5367 | 5496 | 234 | 458 | 255 | 213 |
| 5792 | 5367 | 5496 | 234 | 458 | 256 | 213 |
| 5792 | 5367 | 5496 | 234 | 459 | 255 | 213 |
| 5792 | 5367 | 5496 | 234 | 459 | 256 | 213 |
| 5792 | 5367 | 5496 | 235 | 458 | 255 | 213 |
| 5792 | 5367 | 5496 | 235 | 458 | 256 | 213 |
| 5793 | 5367 | 5495 | 234 | 457 | 255 | 213 |
| 5793 | 5367 | 5495 | 234 | 457 | 256 | 213 |
| 5793 | 5367 | 5495 | 234 | 458 | 255 | 213 |
| 5793 | 5367 | 5495 | 234 | 458 | 256 | 213 |
| 5793 | 5367 | 5495 | 234 | 459 | 255 | 213 |
| 5793 | 5367 | 5495 | 234 | 459 | 256 | 213 |

Fig. 11

| 5793 | 5367 | 5495 | 235 | 458 | 255 | 213 |
| 5793 | 5367 | 5495 | 235 | 458 | 256 | 213 |
| 5793 | 5367 | 5496 | 234 | 457 | 255 | 213 |
| 5793 | 5367 | 5496 | 234 | 457 | 256 | 213 |
| 5793 | 5367 | 5496 | 234 | 458 | 255 | 213 |
| 5793 | 5367 | 5496 | 234 | 458 | 256 | 213 |
| 5793 | 5367 | 5496 | 234 | 459 | 256 | 213 |
| 5793 | 5367 | 5496 | 235 | 458 | 256 | 213 |

Fig. 11 ( continued )

| $T_a$ | $T_b$ | $T_c$ | $T_d$ | $T_e$ | $T_f$ | $T_g$ |
|---|---|---|---|---|---|---|
| 5792 | 6217 | 6064 | -247 | -506 | -296 | -272 |
| 5792 | 6217 | 6064 | -247 | -506 | -296 | -271 |
| 5792 | 6217 | 6064 | -247 | -505 | -296 | -272 |
| 5792 | 6217 | 6064 | -247 | -505 | -296 | -271 |
| 5792 | 6217 | 6064 | -246 | -505 | -296 | -271 |
| 5793 | 6217 | 6063 | -247 | -506 | -296 | -271 |
| 5793 | 6217 | 6063 | -247 | -505 | -296 | -271 |
| 5793 | 6217 | 6064 | -247 | -506 | -296 | -271 |
| 5793 | 6217 | 6064 | -247 | -505 | -296 | -272 |
| 5793 | 6217 | 6064 | -247 | -505 | -296 | -271 |

Fig. 12

| $T_a$ | $T_b$ | $T_c$ | $T_d$ | $T_e$ | $T_f$ | $T_g$ |
|-------|-------|-------|-------|-------|-------|-------|
| 8688 | 8688 | 8701 | -362 | -916 | 0 | -362 |
| 8688 | 8688 | 8702 | -362 | -916 | 0 | -362 |
| 8688 | 8689 | 8700 | -362 | -917 | 0 | -362 |
| 8688 | 8689 | 8700 | -362 | -916 | 0 | -362 |
| 8688 | 8689 | 8700 | -362 | -915 | 0 | -362 |
| 8688 | 8689 | 8701 | -363 | -916 | 0 | -362 |
| 8688 | 8689 | 8701 | -362 | -917 | 0 | -362 |
| 8688 | 8689 | 8701 | -362 | -916 | -1 | -362 |
| 8688 | 8689 | 8701 | -362 | -916 | 0 | -363 |
| 8688 | 8689 | 8701 | -362 | -916 | 0 | -362 |
| 8688 | 8689 | 8701 | -362 | -916 | 0 | -361 |
| 8688 | 8689 | 8701 | -362 | -916 | 1 | -362 |
| 8688 | 8689 | 8701 | -362 | -915 | -1 | -362 |
| 8688 | 8689 | 8701 | -362 | -915 | 0 | -362 |
| 8688 | 8689 | 8701 | -362 | -915 | 1 | -362 |
| 8688 | 8689 | 8701 | -361 | -916 | 0 | -362 |
| 8688 | 8689 | 8702 | -362 | -916 | 0 | -362 |
| 8688 | 8689 | 8702 | -362 | -915 | 0 | -362 |
| 8689 | 8688 | 8700 | -362 | -917 | 0 | -362 |
| 8689 | 8688 | 8700 | -362 | -916 | 0 | -362 |
| 8689 | 8688 | 8700 | -362 | -915 | 0 | -362 |
| 8689 | 8688 | 8701 | -363 | -916 | 0 | -362 |
| 8689 | 8688 | 8701 | -363 | -915 | 0 | -362 |

Fig. 13

| 8689 | 8688 | 8701 | -362 | -917 | -1 | -362 |
| 8689 | 8688 | 8701 | -362 | -917 | 0 | -362 |
| 8689 | 8688 | 8701 | -362 | -916 | -1 | -362 |
| 8689 | 8688 | 8701 | -362 | -916 | 0 | -363 |
| 8689 | 8688 | 8701 | -362 | -916 | 0 | -362 |
| 8689 | 8688 | 8701 | -362 | -916 | 0 | -361 |
| 8689 | 8688 | 8701 | -362 | -916 | 1 | -362 |
| 8689 | 8688 | 8701 | -362 | -915 | 0 | -362 |
| 8689 | 8688 | 8701 | -361 | -916 | 0 | -362 |
| 8689 | 8688 | 8702 | -362 | -917 | 0 | -362 |
| 8689 | 8688 | 8702 | -362 | -916 | 0 | -362 |
| 8689 | 8688 | 8702 | -362 | -915 | 0 | -362 |
| 8689 | 8689 | 8699 | -362 | -916 | 0 | -362 |
| 8689 | 8689 | 8700 | -363 | -917 | 0 | -362 |
| 8689 | 8689 | 8700 | -363 | -916 | 0 | -362 |
| 8689 | 8689 | 8700 | -363 | -915 | 0 | -362 |
| 8689 | 8689 | 8700 | -362 | -917 | -1 | -362 |
| 8689 | 8689 | 8700 | -362 | -917 | 0 | -363 |
| 8689 | 8689 | 8700 | -362 | -917 | 0 | -362 |
| 8689 | 8689 | 8700 | -362 | -916 | -1 | -362 |
| 8689 | 8689 | 8700 | -362 | -916 | 0 | -363 |
| 8689 | 8689 | 8700 | -362 | -916 | 0 | -362 |
| 8689 | 8689 | 8700 | -362 | -916 | 0 | -361 |
| 8689 | 8689 | 8700 | -362 | -916 | 1 | -362 |

Fig. 13 ( continued )

| 8689 | 8689 | 8700 | -362 | -915 | -1 | -362 |
|------|------|------|------|------|-----|------|
| 8689 | 8689 | 8700 | -362 | -915 | 0 | -363 |
| 8689 | 8689 | 8700 | -362 | -915 | 0 | -362 |
| 8689 | 8689 | 8700 | -362 | -915 | 0 | -361 |
| 8689 | 8689 | 8700 | -362 | -915 | 1 | -362 |
| 8689 | 8689 | 8700 | -361 | -916 | 0 | -362 |
| 8689 | 8689 | 8701 | -363 | -917 | 0 | -362 |
| 8689 | 8689 | 8701 | -363 | -916 | 0 | -362 |
| 8689 | 8689 | 8701 | -363 | -915 | 0 | -362 |
| 8689 | 8689 | 8701 | -362 | -917 | -1 | -362 |
| 8689 | 8689 | 8701 | -362 | -917 | 0 | -363 |
| 8689 | 8689 | 8701 | -362 | -917 | 0 | -362 |
| 8689 | 8689 | 8701 | -362 | -917 | 0 | -361 |
| 8689 | 8689 | 8701 | -362 | -917 | 1 | -362 |
| 8689 | 8689 | 8701 | -362 | -916 | -1 | -362 |
| 8689 | 8689 | 8701 | -362 | -916 | 0 | -363 |
| 8689 | 8689 | 8701 | -362 | -916 | 0 | -362 |
| 8689 | 8689 | 8701 | -362 | -916 | 0 | -361 |
| 8689 | 8689 | 8701 | -362 | -916 | 1 | -362 |
| 8689 | 8689 | 8701 | -362 | -915 | -1 | -362 |
| 8689 | 8689 | 8701 | -362 | -915 | 0 | -363 |
| 8689 | 8689 | 8701 | -362 | -915 | 0 | -362 |
| 8689 | 8689 | 8701 | -362 | -915 | 0 | -361 |
| 8689 | 8689 | 8701 | -362 | -915 | 1 | -362 |

Fig. 13 ( continued )

| | | | | | | |
|---|---|---|---|---|---|---|
| 8689 | 8689 | 8701 | -361 | -916 | 0 | -362 |
| 8689 | 8689 | 8701 | -361 | -915 | 0 | -362 |
| 8689 | 8689 | 8702 | -362 | -916 | 0 | -362 |
| 8689 | 8689 | 8702 | -362 | -915 | 0 | -362 |
| 8690 | 8688 | 8700 | -362 | -917 | 0 | -362 |
| 8690 | 8688 | 8700 | -362 | -916 | 0 | -362 |
| 8690 | 8688 | 8700 | -362 | -915 | 0 | -362 |
| 8690 | 8688 | 8701 | -363 | -916 | 0 | -362 |
| 8690 | 8688 | 8701 | -362 | -917 | 0 | -362 |
| 8690 | 8688 | 8701 | -362 | -916 | -1 | -362 |
| 8690 | 8688 | 8701 | -362 | -916 | 0 | -363 |
| 8690 | 8688 | 8701 | -362 | -916 | 0 | -362 |
| 8690 | 8688 | 8701 | -362 | -916 | 0 | -361 |
| 8690 | 8688 | 8701 | -362 | -916 | 1 | -362 |
| 8690 | 8688 | 8701 | -362 | -915 | 0 | -362 |
| 8690 | 8688 | 8701 | -361 | -916 | 0 | -362 |
| 8690 | 8688 | 8702 | -362 | -916 | 0 | -362 |
| 8690 | 8689 | 8700 | -363 | -916 | 0 | -362 |
| 8690 | 8689 | 8700 | -362 | -917 | 0 | -362 |
| 8690 | 8689 | 8700 | -362 | -916 | 0 | -363 |
| 8690 | 8689 | 8700 | -362 | -916 | 0 | -362 |
| 8690 | 8689 | 8700 | -362 | -916 | 0 | -361 |
| 8690 | 8689 | 8700 | -362 | -916 | 1 | -362 |
| 8690 | 8689 | 8700 | -362 | -915 | 0 | -362 |

Fig. 13 ( continued )

| | | | | | | |
|---|---|---|---|---|---|---|
| 8690 | 8689 | 8701 | -362 | -917 | 0 | -362 |
| 8690 | 8689 | 8701 | -362 | -916 | -1 | -362 |
| 8690 | 8689 | 8701 | -362 | -916 | 0 | -362 |
| 8690 | 8689 | 8701 | -362 | -915 | 0 | -362 |

## Fig. 13 ( continued )

| $T_a$ | $T_b$ | $T_c$ | $T_d$ | $T_e$ | $T_f$ | $T_g$ |
|---|---|---|---|---|---|---|
| 3861 | 3849 | 3833 | 76 | 130 | -188 | 84 |
| 3861 | 3849 | 3833 | 76 | 130 | -187 | 84 |
| 3861 | 3849 | 3833 | 76 | 131 | -187 | 84 |
| 3861 | 3849 | 3833 | 77 | 130 | -188 | 84 |
| 3861 | 3849 | 3833 | 77 | 130 | -187 | 84 |
| 3861 | 3849 | 3834 | 76 | 130 | -187 | 84 |
| 3862 | 3849 | 3833 | 76 | 130 | -188 | 84 |
| 3862 | 3849 | 3833 | 76 | 130 | -187 | 84 |
| 3862 | 3849 | 3833 | 76 | 131 | -187 | 84 |
| 3862 | 3849 | 3833 | 77 | 130 | -187 | 84 |

## Fig. 14

| $T_a$ | $T_b$ | $T_c$ | $T_d$ | $T_e$ | $T_f$ | $T_g$ |
|-------|-------|-------|-------|-------|-------|-------|
| 5460 | 5861 | 5696 | -1 | 124 | -279 | 0 |
| 5460 | 5861 | 5696 | 0 | 123 | -280 | 0 |
| 5460 | 5861 | 5696 | 0 | 123 | -279 | 0 |
| 5460 | 5861 | 5696 | 0 | 124 | -280 | 0 |
| 5460 | 5861 | 5696 | 0 | 124 | -279 | -1 |
| 5460 | 5861 | 5696 | 0 | 124 | -279 | 0 |
| 5460 | 5861 | 5696 | 0 | 124 | -279 | 1 |
| 5460 | 5861 | 5696 | 0 | 125 | -279 | 0 |
| 5460 | 5861 | 5696 | 1 | 124 | -279 | 0 |
| 5460 | 5861 | 5697 | -1 | 124 | -279 | 0 |
| 5460 | 5861 | 5697 | 0 | 123 | -280 | 0 |
| 5460 | 5861 | 5697 | 0 | 123 | -279 | 0 |
| 5460 | 5861 | 5697 | 0 | 124 | -280 | 0 |
| 5460 | 5861 | 5697 | 0 | 124 | -279 | -1 |
| 5460 | 5861 | 5697 | 0 | 124 | -279 | 0 |
| 5460 | 5861 | 5697 | 0 | 124 | -279 | 1 |
| 5460 | 5861 | 5697 | 0 | 124 | -278 | 0 |
| 5460 | 5861 | 5697 | 0 | 125 | -279 | 0 |
| 5460 | 5861 | 5697 | 1 | 124 | -279 | 0 |
| 5460 | 5862 | 5696 | 0 | 123 | -279 | 0 |
| 5460 | 5862 | 5696 | 0 | 124 | -279 | 0 |
| 5460 | 5862 | 5696 | 0 | 125 | -279 | 0 |
| 5460 | 5862 | 5697 | 0 | 124 | -279 | 0 |

Fig. 15

| | | | | | | |
|---|---|---|---|---|---|---|
| 5461 | 5860 | 5696 | 0 | 123 | -279 | 0 |
| 5461 | 5860 | 5696 | 0 | 124 | -279 | 0 |
| 5461 | 5860 | 5697 | 0 | 123 | -279 | 0 |
| 5461 | 5860 | 5697 | 0 | 124 | -280 | 0 |
| 5461 | 5860 | 5697 | 0 | 124 | -279 | 0 |
| 5461 | 5860 | 5697 | 0 | 125 | -279 | 0 |
| 5461 | 5861 | 5695 | -1 | 123 | -279 | 0 |
| 5461 | 5861 | 5695 | -1 | 124 | -279 | 0 |
| 5461 | 5861 | 5695 | 0 | 123 | -280 | 0 |
| 5461 | 5861 | 5695 | 0 | 123 | -279 | -1 |
| 5461 | 5861 | 5695 | 0 | 123 | -279 | 0 |
| 5461 | 5861 | 5695 | 0 | 123 | -279 | 1 |
| 5461 | 5861 | 5695 | 0 | 124 | -280 | 0 |
| 5461 | 5861 | 5695 | 0 | 124 | -279 | -1 |
| 5461 | 5861 | 5695 | 0 | 124 | -279 | 0 |
| 5461 | 5861 | 5695 | 0 | 124 | -279 | 1 |
| 5461 | 5861 | 5695 | 0 | 124 | -278 | 0 |
| 5461 | 5861 | 5695 | 0 | 125 | -279 | 0 |
| 5461 | 5861 | 5695 | 1 | 124 | -279 | 0 |
| 5461 | 5861 | 5696 | -1 | 123 | -280 | 0 |
| 5461 | 5861 | 5696 | -1 | 123 | -279 | -1 |
| 5461 | 5861 | 5696 | -1 | 123 | -279 | 0 |
| 5461 | 5861 | 5696 | -1 | 123 | -279 | 1 |

Fig. 15 ( continued )

| 5461 | 5861 | 5696 | -1 | 124 | -280 | 0 |
| 5461 | 5861 | 5696 | -1 | 124 | -279 | -1 |
| 5461 | 5861 | 5696 | -1 | 124 | -279 | 0 |
| 5461 | 5861 | 5696 | -1 | 124 | -279 | 1 |
| 5461 | 5861 | 5696 | -1 | 124 | -278 | 0 |
| 5461 | 5861 | 5696 | -1 | 125 | -279 | 0 |
| 5461 | 5861 | 5696 | 0 | 122 | -279 | 0 |
| 5461 | 5861 | 5696 | 0 | 123 | -280 | -1 |
| 5461 | 5861 | 5696 | 0 | 123 | -280 | 0 |
| 5461 | 5861 | 5696 | 0 | 123 | -280 | 1 |
| 5461 | 5861 | 5696 | 0 | 123 | -279 | -1 |
| 5461 | 5861 | 5696 | 0 | 123 | -279 | 0 |
| 5461 | 5861 | 5696 | 0 | 123 | -279 | 1 |
| 5461 | 5861 | 5696 | 0 | 123 | -278 | 0 |
| 5461 | 5861 | 5696 | 0 | 124 | -280 | -1 |
| 5461 | 5861 | 5696 | 0 | 124 | -280 | 0 |
| 5461 | 5861 | 5696 | 0 | 124 | -280 | 1 |
| 5461 | 5861 | 5696 | 0 | 124 | -279 | -1 |
| 5461 | 5861 | 5696 | 0 | 124 | -279 | 0 |
| 5461 | 5861 | 5696 | 0 | 124 | -279 | 1 |
| 5461 | 5861 | 5696 | 0 | 124 | -278 | -1 |
| 5461 | 5861 | 5696 | 0 | 124 | -278 | 0 |
| 5461 | 5861 | 5696 | 0 | 124 | -278 | 1 |

Fig. 15 ( continued )

| | | | | | | |
|---|---|---|---|---|---|---|
| 5461 | 5861 | 5696 | 0 | 125 | -280 | 0 |
| 5461 | 5861 | 5696 | 0 | 125 | -280 | 1 |
| 5461 | 5861 | 5696 | 0 | 125 | -279 | -1 |
| 5461 | 5861 | 5696 | 0 | 125 | -279 | 0 |
| 5461 | 5861 | 5696 | 0 | 125 | -279 | 1 |
| 5461 | 5861 | 5696 | 0 | 125 | -278 | 0 |
| 5461 | 5861 | 5696 | 0 | 126 | -279 | 0 |
| 5461 | 5861 | 5696 | 1 | 123 | -280 | 0 |
| 5461 | 5861 | 5696 | 1 | 123 | -279 | -1 |
| 5461 | 5861 | 5696 | 1 | 123 | -279 | 0 |
| 5461 | 5861 | 5696 | 1 | 123 | -279 | 1 |
| 5461 | 5861 | 5696 | 1 | 124 | -280 | 0 |
| 5461 | 5861 | 5696 | 1 | 124 | -279 | -1 |
| 5461 | 5861 | 5696 | 1 | 124 | -279 | 0 |
| 5461 | 5861 | 5696 | 1 | 124 | -279 | 1 |
| 5461 | 5861 | 5696 | 1 | 124 | -278 | 0 |
| 5461 | 5861 | 5696 | 1 | 125 | -280 | 0 |
| 5461 | 5861 | 5696 | 1 | 125 | -279 | 0 |
| 5461 | 5861 | 5697 | -1 | 123 | -279 | 0 |
| 5461 | 5861 | 5697 | -1 | 124 | -280 | 0 |
| 5461 | 5861 | 5697 | -1 | 124 | -279 | -1 |
| 5461 | 5861 | 5697 | -1 | 124 | -279 | 0 |
| 5461 | 5861 | 5697 | -1 | 124 | -279 | 1 |

Fig. 15 ( continued )

| 5461 | 5861 | 5697 | -1 | 125 | -279 | 0 |
|------|------|------|----|-----|------|---|
| 5461 | 5861 | 5697 | 0 | 122 | -279 | 0 |
| 5461 | 5861 | 5697 | 0 | 123 | -280 | 0 |
| 5461 | 5861 | 5697 | 0 | 123 | -279 | -1 |
| 5461 | 5861 | 5697 | 0 | 123 | -279 | 0 |
| 5461 | 5861 | 5697 | 0 | 123 | -279 | 1 |
| 5461 | 5861 | 5697 | 0 | 123 | -278 | 0 |
| 5461 | 5861 | 5697 | 0 | 124 | -280 | -1 |
| 5461 | 5861 | 5697 | 0 | 124 | -280 | 0 |
| 5461 | 5861 | 5697 | 0 | 124 | -280 | 1 |
| 5461 | 5861 | 5697 | 0 | 124 | -279 | -1 |
| 5461 | 5861 | 5697 | 0 | 124 | -279 | 0 |
| 5461 | 5861 | 5697 | 0 | 124 | -279 | 1 |
| 5461 | 5861 | 5697 | 0 | 124 | -278 | -1 |
| 5461 | 5861 | 5697 | 0 | 124 | -278 | 0 |
| 5461 | 5861 | 5697 | 0 | 125 | -280 | 0 |
| 5461 | 5861 | 5697 | 0 | 125 | -279 | -1 |
| 5461 | 5861 | 5697 | 0 | 125 | -279 | 0 |
| 5461 | 5861 | 5697 | 0 | 125 | -279 | 1 |
| 5461 | 5861 | 5697 | 0 | 125 | -278 | 0 |
| 5461 | 5861 | 5697 | 1 | 123 | -279 | 0 |
| 5461 | 5861 | 5697 | 1 | 124 | -280 | 0 |
| 5461 | 5861 | 5697 | 1 | 124 | -279 | -1 |

Fig. 15 ( continued )

| 5461 | 5861 | 5697 | 1 | 124 | -279 | 0 |
|------|------|------|-----|-----|------|-----|
| 5461 | 5861 | 5697 | 1 | 124 | -279 | 1 |
| 5461 | 5861 | 5697 | 1 | 124 | -278 | 0 |
| 5461 | 5861 | 5697 | 1 | 125 | -279 | 0 |
| 5461 | 5861 | 5698 | 0 | 123 | -279 | 0 |
| 5461 | 5861 | 5698 | 0 | 124 | -279 | 0 |
| 5461 | 5862 | 5695 | 0 | 123 | -279 | 0 |
| 5461 | 5862 | 5695 | 0 | 124 | -280 | 0 |
| 5461 | 5862 | 5695 | 0 | 124 | -279 | 0 |
| 5461 | 5862 | 5695 | 0 | 125 | -279 | 0 |
| 5461 | 5862 | 5696 | -1 | 124 | -279 | 0 |
| 5461 | 5862 | 5696 | 0 | 123 | -280 | 0 |
| 5461 | 5862 | 5696 | 0 | 123 | -279 | 0 |
| 5461 | 5862 | 5696 | 0 | 124 | -280 | 0 |
| 5461 | 5862 | 5696 | 0 | 124 | -279 | -1 |
| 5461 | 5862 | 5696 | 0 | 124 | -279 | 0 |
| 5461 | 5862 | 5696 | 0 | 124 | -279 | 1 |
| 5461 | 5862 | 5696 | 0 | 124 | -278 | 0 |
| 5461 | 5862 | 5696 | 0 | 125 | -279 | 0 |
| 5461 | 5862 | 5696 | 1 | 124 | -279 | 0 |
| 5461 | 5862 | 5697 | 0 | 123 | -279 | 0 |
| 5461 | 5862 | 5697 | 0 | 124 | -279 | 0 |
| 5462 | 5860 | 5696 | 0 | 123 | -279 | 0 |

Fig. 15 ( continued )

| | | | | | | |
|------|------|------|----|-----|------|----|
| 5462 | 5860 | 5696 | 0  | 124 | -279 | 0  |
| 5462 | 5860 | 5696 | 0  | 125 | -279 | 0  |
| 5462 | 5860 | 5697 | 0  | 123 | -279 | 0  |
| 5462 | 5860 | 5697 | 0  | 124 | -279 | 0  |
| 5462 | 5860 | 5697 | 0  | 125 | -279 | 0  |
| 5462 | 5861 | 5695 | -1 | 123 | -279 | 0  |
| 5462 | 5861 | 5695 | -1 | 124 | -279 | 0  |
| 5462 | 5861 | 5695 | 0  | 123 | -280 | 0  |
| 5462 | 5861 | 5695 | 0  | 123 | -279 | -1 |
| 5462 | 5861 | 5695 | 0  | 123 | -279 | 0  |
| 5462 | 5861 | 5695 | 0  | 123 | -279 | 1  |
| 5462 | 5861 | 5695 | 0  | 124 | -280 | 0  |
| 5462 | 5861 | 5695 | 0  | 124 | -279 | -1 |
| 5462 | 5861 | 5695 | 0  | 124 | -279 | 0  |
| 5462 | 5861 | 5695 | 0  | 124 | -279 | 1  |
| 5462 | 5861 | 5695 | 0  | 124 | -278 | 0  |
| 5462 | 5861 | 5695 | 0  | 125 | -279 | 0  |
| 5462 | 5861 | 5695 | 1  | 123 | -279 | 0  |
| 5462 | 5861 | 5695 | 1  | 124 | -279 | 0  |
| 5462 | 5861 | 5696 | -1 | 123 | -280 | 0  |
| 5462 | 5861 | 5696 | -1 | 123 | -279 | 0  |
| 5462 | 5861 | 5696 | -1 | 124 | -280 | 0  |
| 5462 | 5861 | 5696 | -1 | 124 | -279 | -1 |

Fig. 15 ( continued )

| | | | | | | |
|------|------|------|-----|-----|------|-----|
| 5462 | 5861 | 5696 | -1 | 124 | -279 | 0 |
| 5462 | 5861 | 5696 | -1 | 124 | -279 | 1 |
| 5462 | 5861 | 5696 | -1 | 124 | -278 | 0 |
| 5462 | 5861 | 5696 | -1 | 125 | -279 | 0 |
| 5462 | 5861 | 5696 | 0 | 122 | -279 | 0 |
| 5462 | 5861 | 5696 | 0 | 123 | -280 | 0 |
| 5462 | 5861 | 5696 | 0 | 123 | -280 | 1 |
| 5462 | 5861 | 5696 | 0 | 123 | -279 | -1 |
| 5462 | 5861 | 5696 | 0 | 123 | -279 | 0 |
| 5462 | 5861 | 5696 | 0 | 123 | -279 | 1 |
| 5462 | 5861 | 5696 | 0 | 123 | -278 | 0 |
| 5462 | 5861 | 5696 | 0 | 124 | -280 | -1 |
| 5462 | 5861 | 5696 | 0 | 124 | -280 | 0 |
| 5462 | 5861 | 5696 | 0 | 124 | -280 | 1 |
| 5462 | 5861 | 5696 | 0 | 124 | -279 | -1 |
| 5462 | 5861 | 5696 | 0 | 124 | -279 | 0 |
| 5462 | 5861 | 5696 | 0 | 124 | -279 | 1 |
| 5462 | 5861 | 5696 | 0 | 124 | -278 | -1 |
| 5462 | 5861 | 5696 | 0 | 124 | -278 | 0 |
| 5462 | 5861 | 5696 | 0 | 125 | -280 | 0 |
| 5462 | 5861 | 5696 | 0 | 125 | -279 | -1 |
| 5462 | 5861 | 5696 | 0 | 125 | -279 | 0 |
| 5462 | 5861 | 5696 | 0 | 125 | -279 | 1 |

Fig. 15 ( continued )

| | | | | | | |
|------|------|------|----|-----|------|----|
| 5462 | 5861 | 5696 | 0 | 125 | -278 | 0 |
| 5462 | 5861 | 5696 | 1 | 123 | -280 | 0 |
| 5462 | 5861 | 5696 | 1 | 123 | -279 | 0 |
| 5462 | 5861 | 5696 | 1 | 124 | -280 | 0 |
| 5462 | 5861 | 5696 | 1 | 124 | -279 | -1 |
| 5462 | 5861 | 5696 | 1 | 124 | -279 | 0 |
| 5462 | 5861 | 5696 | 1 | 124 | -279 | 1 |
| 5462 | 5861 | 5696 | 1 | 124 | -278 | 0 |
| 5462 | 5861 | 5696 | 1 | 125 | -279 | 0 |
| 5462 | 5861 | 5697 | -1 | 123 | -279 | 0 |
| 5462 | 5861 | 5697 | -1 | 124 | -279 | 0 |
| 5462 | 5861 | 5697 | 0 | 123 | -280 | 0 |
| 5462 | 5861 | 5697 | 0 | 123 | -279 | -1 |
| 5462 | 5861 | 5697 | 0 | 123 | -279 | 0 |
| 5462 | 5861 | 5697 | 0 | 123 | -279 | 1 |
| 5462 | 5861 | 5697 | 0 | 123 | -278 | 0 |
| 5462 | 5861 | 5697 | 0 | 124 | -280 | 0 |
| 5462 | 5861 | 5697 | 0 | 124 | -279 | -1 |
| 5462 | 5861 | 5697 | 0 | 124 | -279 | 0 |
| 5462 | 5861 | 5697 | 0 | 124 | -279 | 1 |
| 5462 | 5861 | 5697 | 0 | 124 | -278 | 0 |
| 5462 | 5861 | 5697 | 0 | 125 | -280 | 0 |
| 5462 | 5861 | 5697 | 0 | 125 | -279 | 0 |

Fig. 15 ( continued )

| 5462 | 5861 | 5697 | 1 | 123 | -279 | 0 |
|------|------|------|---|-----|------|---|
| 5462 | 5861 | 5697 | 1 | 124 | -279 | 0 |
| 5462 | 5862 | 5695 | 0 | 124 | -279 | 0 |
| 5462 | 5862 | 5696 | 0 | 123 | -279 | 0 |
| 5462 | 5862 | 5696 | 0 | 124 | -279 | 0 |
| 5463 | 5861 | 5696 | 0 | 123 | -279 | 0 |
| 5463 | 5861 | 5696 | 0 | 124 | -279 | 0 |

Fig. 15 ( continued )

| Input Signals | Output Signals | b | Recommend Values of Transform Cores [1] | | | | | | | Remarks |
|---|---|---|---|---|---|---|---|---|---|---|
| | | | $T_a$ | $T_b$ | $T_c$ | $T_d$ | $T_e$ | $T_f$ | $T_g$ | |
| DCT | AVS | 17 | 5793 | 6232 | 6084 | -130 | -74 | 7 | -130 | [2] |
| DCT | H.264/AVC | 13 | 1 | -13 | -21 | 178 | 580 | 398 | 162 | [3] |
| DCT | WMV9 | 15 | 8690 | 8690 | 8744 | -190 | -297 | 423 | -172 | [2] |
| AVS | DCT | 8 | 5793 | 5380 | 5514 | 112 | 67 | -6 | 112 | [2] |
| AVS | H.264/AVC | 8 | 5793 | 5367 | 5495 | 234 | 458 | 256 | 213 | [2] |
| AVS | WMV9 | 0 | 768 | 714 | 736 | 0 | -16 | 34 | 0 | [2] |
| H.264/AVC | DCT | 12 | 0 | -7 | -10 | -81 | -290 | -199 | -89 | [3] |
| H.264/AVC | AVS | 17 | 5793 | 6217 | 6064 | -247 | -505 | -296 | -271 | [2] |
| H.264/AVC | WMV9 | 8 | 8689 | 8689 | 8701 | -362 | -916 | 0 | -362 | [2] |
| WMV9 | DCT | 17 | 3862 | 3849 | 3833 | 76 | 130 | -187 | 84 | [2] |
| WMV9 | AVS | 22 | 5461 | 5861 | 5696 | 0 | 124 | -279 | 0 | [2] |
| WMV9 | H.264/AVC | 16 | 1931 | 1924 | 1907 | 80 | 201 | 0 | 80 | [2] |

[1] Only a recommend value is shown for each transform, and other available values are shown in Figs. 8-15.

[2] $T = T ( T_a, T_b, T_c, T_d, T_e, T_f, T_g )$ is used. Please refer to the written description for detail.

[3] $T = I_8 + T ( T_a, T_b, T_c, T_d, T_e, T_f, T_g )$ is used. Please refer to the written description for detail.

# Fig. 16

## INTERNATIONAL SEARCH REPORT

| | International application No. |
|---|---|
| | PCT/CN2006/003350 |

### A. CLASSIFICATION OF SUBJECT MATTER

H04N7/30(2007.01)i

According to International Patent Classification (IPC) or to both national classification and IPC

### B. FIELDS SEARCHED

Minimum documentation searched (classification system followed by classification symbols)

IPC H04N

Documentation searched other than minimum documentation to the extent that such documents are included in the fields searched

Electronic data base consulted during the international search (name of data base and, where practicable, search terms used)

**WPI, EPODOC, PAJ:** image, video, picture, code, encode, compress, coefficient, transform, convert, multiple, add, sum, accumulate, shift, drift, displace, DCT, ICT, discrete cosine transform, integral cosine transform

**CPRS, CNKI:** the Chinese words of "image, video, picture, code, compress, coefficient, transform, convert, multiply, add, shift, DCT, ICT, discrete cosine transform, integral cosine transform"

### C. DOCUMENTS CONSIDERED TO BE RELEVANT

| Category* | Citation of document, with indication, where appropriate, of the relevant passages | Relevant to claim No. |
|---|---|---|
| A | CN1364384A (KONINK PHILIPS ELECTRONICS NV) 14. Aug. 2002 (14. 08. 2002) see the whole document | 1-20 |
| A | CN1409558A (MICROSOFT CORP) 09. Apr. 2003 (09.04.2003) see the whole document | 1-20 |
| A | US5699286A (KOREA TELECOM AUTHORITY) 16. Dec.1997 (16.12.1997)see the whole document | 1-20 |

☐ Further documents are listed in the continuation of Box C.  ☒ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim (S) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&"document member of the same patent family |

| Date of the actual completion of the international search | Date of mailing of the international search report |
|---|---|
| 06. Mar. 2007 (06.03.2007) | 2 2 MAR 2007 (2 2 · 0 3 · 2 0 0 7) |
| Name and mailing address of the ISA/CN<br>The State Intellectual Property Office, the P.R.China<br>6 Xitucheng Rd., Jimen Bridge, Haidian District, Beijing, China 100088<br>Facsimile No. 86-10-62019451 | Authorized officer<br><br>TAN, Wen<br><br>Telephone No. (86-10)62084645 |

Form PCT/ISA /210 (second sheet) (April 2005)

**EP 1 959 690 A1**

## INTERNATIONAL SEARCH REPORT
Information on patent family members

International application No.

PCT/CN2006/003350

| Patent Documents referred in the Report | Publication Date | Patent Family | Publication Date |
|---|---|---|---|
| CN1364384A | 14.08.2002 | WO0152550A1 | 19.07.2001 |
| | | EP1172008A1 | 16.01.2002 |
| | | KR20020001760A | 09.01.2002 |
| | | US2003058940A1 | 27.03.2003 |
| | | JP2003520513T | 02.07.2003 |
| | | US6963609B2 | 08.11.2005 |
| | | CN1199468C | 27.04.2005 |
| CN1409558A | 09.04.2003 | EP1294198A2 | 19.03. 2003 |
| | | US2003081674A1 | 01.05.2003 |
| | | KR20030024581A | 26.03.2003 |
| | | JP2003204552A | 18.07.2003 |
| | | TW221388B1 | 21.09.2004 |
| | | US6882685B2 | 19.04.2005 |
| | | US2005141609A1 | 30.06.2005 |
| | | US2005175097A1 | 11.08.2005 |
| | | US2005180503A1 | 18.08.2005 |
| | | US2005213659A1 | 29.09.2005 |
| | | CN1764277A | 26.04.2006 |
| | | CN1764278A | 26.04.2006 |
| | | CN1764279A | 26.04.2006 |
| | | CN1231068C | 07.12.2005 |
| | | US7106797B2 | 12.09.2006 |
| US5699286A | 16.12.1997 | JP8063458A | 08.03.1996 |
| | | KR0136517B1 | 15.05.1999 |
| | | JP2648468B2 | 27.08.1997 |

Form PCT/ISA /210 (patent family annex) (April 2005)